# EUROPEAN PATENT APPLICATION

(11) **EP 4 838 664 A1**
(43) Date of publication of application: **11.11.2026**
(21) Application number: 24941178.6
(22) Date of filing: 31.05.2024
(51) Int. Cl.: H01M 50/289

(54) **BATTERY CELL, BATTERY AND ELECTRIC DEVICE**

(71) Applicant: Contemporary Amperex Technology Co., Limited, Ningde, Fujian 352100 (CN)
(72) Inventor: CHEN, Congsheng, Ningde, Fujian 352100 (CN); HUANG, Biao, Ningde, Fujian 352100 (CN); LIN, Wenfa, Ningde, Fujian 352100 (CN); WEI, Binbin, Ningde, Fujian 352100 (CN)
(74) Representative: Ziebig Hengelhaupt Intellectual Property Attorneys Patentanwaltskanzlei PartGmbB
(86) International application number: PCT/CN2024/096888
(87) International publication number: WO 2025/245891

(57) **Abstract**

A battery cell, a battery and an electric device. The battery cell comprises: a casing component, which comprises a casing body, wherein an open end and a first casing wall are respectively formed at two opposite ends of the casing body, the first casing wall being provided with a mounting hole; a second casing wall is formed on at least one side of the casing body adjacent to the first casing wall; a guide portion is provided between the second casing wall and the first casing wall, the guide part comprising a guide face located in the casing body, and in the direction from the open end to the first casing wall, the distance between the guide face and an inner wall surface of the second casing wall gradually increasing; a terminal post component, which is mounted on the first casing wall and covers the mounting hole, wherein the terminal post component comprises a terminal post body arranged opposite the mounting hole; and a battery cell component, which is accommodated in an accommodating cavity of the casing body and is connected to the terminal post body.

## Description

### TECHNICAL FIELD

The present application relates to the field of batteries, and in particular, to a battery cell, a battery, and an electric device.

### BACKGROUND

In recent years, new energy vehicles have developed by leaps and bounds. In the field of electric vehicles, power batteries, as the power source of electric vehicles, play an irreplaceable and important role. The battery is composed of a case and a plurality of battery cells accommodated in the case. The battery cell includes a cell component and a housing configured to accommodate the cell component. Currently, when the cell component is inserted into the housing, it is difficult to align the cell component with the housing; that is, it is not easy to center the battery cell component after the battery cell component is inserted into the housing, resulting in high assembly difficulty and poor consistency in the performance of the battery cell.

### SUMMARY

Embodiments of the present application provide a battery cell, a battery, and an electric device. During assembly of the battery cell, a cell component can be quickly positioned at a central position of a housing body, resulting in low assembly difficulty.

In a first aspect, the embodiments of the present application provide a battery cell. The battery cell includes: a housing component, including a housing body, where an open end and a first housing wall are respectively formed at two opposite ends of the housing body, the first housing wall is provided with a mounting hole, a second housing wall is formed on at least one side, adjacent to the first housing wall, of the housing body, a guiding part is disposed between the second housing wall and the first housing wall, the guiding part includes a guiding surface located in the housing body, and in a direction from the open end toward the first housing wall, a distance between the guiding surface and an inner wall surface of the second housing wall gradually increases; a post terminal component, mounted on the first housing wall and covering the mounting hole, where the post terminal component includes a post terminal body disposed opposite to the mounting hole; and a cell component, accommodated in an accommodating cavity of the housing body and connected to the post terminal body.

In the above technical solution, the guiding part is disposed between the first housing wall and the second housing wall, the guiding part includes the guiding surface located within the housing body, and after the cell component is inserted into the housing body, the cell component can cooperate with the guiding surface, such that the cell component can be centered within the housing body. Due to the limiting effect of the guiding surface, during assembly, the cell component can be centered within the housing body by directly placing the cell component in the housing body until the cell component is in contact with and cooperates with the guiding surface, thereby reducing the assembly difficulty, helping to increase the assembly speed, and ensuring the consistency in the relative positions between the cell component and the housing body. After the cell component is inserted into the housing body, the cell component is centered therein. Thus, tab plates connected to the post terminal body exhibit good symmetry, and there will be no situation where an end of some tab plates connected to an active substance-coated part is excessively far away from the post terminal body, such that the tab plates are less likely to be subjected to excessive pulling when the cell component expands.

In some embodiments, the second housing wall is formed on at least two sides, adjacent to the first housing wall, of the housing body.

In the above technical solution, at least two sides of the cell component can be limited, such that the limiting is more stable and the position of the cell component is less likely to shift, thereby allowing the cell component to be stably centered within the housing body.

In some embodiments, the housing body has a first direction and a second direction that are parallel to an outer wall surface of the first housing wall, a dimension of the first housing wall in the first direction is greater than a dimension of the first housing wall in the second direction, and the second housing wall is formed at both ends of the housing body in the first direction and at both ends of the housing body in the second direction.

In the above technical solution, the guiding parts around the housing component can all limit the position of the cell component, such that the limiting is more stable and the cell component is less likely to tilt, resulting in a good limiting effect.

In some embodiments, in a direction perpendicular to the second housing wall, a dimension of the first housing wall is less than a distance between the second housing wall and another opposite housing wall, and the first housing wall is connected to the second housing wall via the guiding part.

In the above technical solution, the dimension of the first housing wall is smaller, such that the first housing wall has good structural strength. The post terminal component is mounted on the first housing wall, and the deflection during pull-out and post terminal push-twist is small, making deformation less likely to occur. Higher strength is achieved when the post terminal component is riveted to the first housing wall.

In some embodiments, a wall thickness of the guiding part and a wall thickness of the second housing wall are less than a wall thickness of the first housing wall.

In the above technical solution, the wall thickness of the first housing wall is relatively large, so as to ensure sufficient structural strength. As a result, the deflection during pull-out and post terminal push-twist is small, making deformation less likely to occur and providing sufficient connection strength between the first housing wall and the post terminal component.

In some embodiments, the guiding surface is configured as an inclined surface.

In the above technical solution, the structure of the guiding surface is relatively simple, thereby facilitating processing, lowering the processing difficulty, and lowering the manufacturing cost. In addition, during mounting, the cell component can easily and quickly cooperate with the guiding surface, thereby reducing the mounting difficulty.

In some embodiments, the guiding part is provided with an outer side surface located outside the housing body, and the outer side surface is parallel to the guiding surface.

In the above technical solution, in one aspect, the processing is convenient, and forming can be achieved by extrusion or stretching, resulting in strong manufacturability; in another aspect, the weight of the guiding part can be made as light as possible, thereby reducing the weight of the housing body, and helping to improve the energy density of the battery.

In some embodiments, a spacing between the outer side surface and the guiding surface is equal to the wall thickness of the second housing wall.

In the above technical solution, the guiding part and the second housing wall are less prone to breakage, the guiding part exhibits good fatigue resistance, and the energy density of the battery cell is high.

In some embodiments, the guiding surface is configured as a circular arc surface, and a radius of the guiding surface is R, where 5 mm ≤ R ≤ 9 mm.

In the above technical solution, allowing the radius of the guiding surface to be within the range can better ensure that the cell component is centered within the housing body without significantly affecting the energy density of the battery.

In some embodiments, the guiding part is provided with an outer side surface located outside the housing body, and the outer side surface is configured as a circular arc surface.

In the above technical solution, during the forming process of the guiding part, the housing body may be directly extruded or bent to form the guiding part, thereby featuring low manufacturing difficulty and facilitating fabrication.

In some embodiments, in the direction from the open end toward the first housing wall, a spacing between the outer side surface and the guiding surface gradually increases.

In the above technical solution, the difference in wall thickness at the joint between the guiding part and the first housing wall is not excessively large, and the difference in wall thickness at the joint between the guiding part and the second housing wall is not excessively large. In one aspect, the structural strength of the guiding part is higher, and the joint between the guiding part and the first housing wall and the joint between the guiding part and the second housing wall are less prone to breakage. In another aspect, the manufacturing difficulty of the housing body can be reduced, and the manufacturability of the housing body is improved.

In some embodiments, a minimum spacing between the outer side surface and the guiding surface is equal to the wall thickness of the second housing wall.

In the above technical solution, no abrupt thickness change occurs between the second housing wall and the guiding part, the structural strength of the guiding part is higher, and better integration is achieved among the guiding part, the first housing wall, and the second housing wall.

In some embodiments, the guiding part includes at least two sections, the at least two sections are sequentially connected in a direction from the second housing wall toward the first housing wall, a latter section is closer to the mounting hole than a former section, any two adjacent sections are arranged at an included angle, and at least a section of the at least two sections proximal to the first housing wall is provided with the guiding surface.

In the above technical solution, the arrangement of the guiding surface can limit the position of the cell component. When two battery cells are arranged side by side, the outer side surfaces of two guiding parts of the two battery cells define a clearance space to accommodate a shaped part. Thus, the height of the post terminal component can be made relatively low, which is conducive to reducing the mass and volume of the battery cells and improving the energy density of the battery.

In some embodiments, two sections are provided, namely a first section and a second section, the first section is perpendicular to the second housing wall, and the second section is perpendicular to the first section, connected to the first housing wall, and provided with the guiding surface.

In the above technical solution, in one aspect, the guiding part including the first section and the second section can limit the position of the cell component. After the cell component is inserted into the housing body, the cell component can cooperate with the guiding surface, such that the cell component can be centered within the housing body. In another aspect, the guiding part including only the first section and the second section has a relatively simple structure, is easy to process and form, and is less prone to deformation.

In some embodiments, a first transition corner is provided between the first section and the second housing wall, and a second transition corner is provided between the second section and the first section.

In the above technical solution, smooth transitions can be achieved between the first section and the second housing wall, between the first section and the second section, and between the second section and the first housing wall, thereby facilitating processing, providing strong manufacturability, and enabling integral forming, while also reducing the stress at the joint between the first section and the second housing wall, the joint between the second section and the first section, and the joint between the second section and the first housing wall.

In some embodiments, a surface of the post terminal body on an end facing the cell component is an inner end surface of the post terminal body, and the cell component is connected to the inner end surface of the post terminal body via a conductive part.

In the above technical solution, the difficulty in assembly and connection between the conductive part and the post terminal body can be reduced, the processing efficiency can be improved, and the reduction in the length of the conductive part can be facilitated, thereby saving materials and costs.

In some embodiments, the cell component includes an active substance-coated part accommodated in the accommodating cavity and a tab part connected to the active substance-coated part, the tab part includes a gathering part formed by stacking and connecting a plurality of layers of tab plates, and at least part of the gathering part is laid on the inner end surface of the post terminal body and is connected to the inner end surface of the post terminal body.

In the above technical solution, by laying the gathering part on the inner end surface of the post terminal body, the gathering part is in a flattened and spread-out state, and at least part of the gathering part falls on the inner end surface of the post terminal body. This will not cause damage to the tab part due to the bending of the gathering part, thereby improving the conductive performance. Moreover, it facilitates the pressing of the gathering part by a welding press nozzle, thereby improving the connection reliability between the gathering part and the post terminal body.

In some embodiments, the cell component includes an active substance-coated part accommodated in the accommodating cavity and a tab part connected to the active substance-coated part, and the tab part is connected to the post terminal body via a conductive member.

In the above technical solution, the conductive member may be connected to the inner end surface of the post terminal body, thereby shortening the length of the conductive member.

In some embodiments, the conductive member includes a first connecting segment, the first connecting segment includes two clamping parts, the tab part includes a tab end part, and the tab end part is sandwiched between the two clamping parts and is connected to the clamping parts.

In the above technical solution, the two clamping parts can be used to limit the tab end part, thereby improving the connection reliability of the plurality of layers of tab plates in the tab end part.

In some embodiments, a surface of the post terminal body on an end facing the cell component is an inner end surface of the post terminal body, the conductive member includes a second connecting segment, the second connecting segment is laid on the inner end surface of the post terminal body and is connected to the inner end surface of the post terminal body, the conductive member is bent at a connection position between the first connecting segment and the second connecting segment, such that the first connecting segment is located on a side, distal to the post terminal body, of the second connecting segment, and one of the clamping parts is supported on a side, distal to the post terminal body, of the tab end part.

In the above technical solution, by supporting the tab part with the clamping part, the redundancy of the tab part can be improved, and the risk of short circuit caused by the reverse insertion of the active substance-coated part into the tab part can be reduced. Moreover, the bent conductive member can serve as a buffer and support, thereby reducing the risk of the cell component impacting the housing component, and improving the reliability of the battery cell.

In some embodiments, the tab part includes a gathering part formed by stacking and connecting a plurality of layers of tab plates, the conductive member includes a first connecting segment, and the gathering part is stacked on a side of the first connecting segment in a thickness direction and is connected to the first connecting segment.

In the above technical solution, the first connecting segment is in the form of a plate, and the thickness direction of the first connecting segment is consistent with the thickness direction of the gathering part. The first connecting segment and the gathering part are stacked in the thickness direction of the first connecting segment, such that the mating method between the gathering part and the conductive member is simple, which is conducive to improving the production efficiency.

In some embodiments, a surface of the post terminal body on an end facing the cell component is an inner end surface of the post terminal body, and the first connecting segment is supported on a side, distal to the post terminal body, of the gathering part, such that the gathering part is sandwiched between the inner end surface of the post terminal body and the first connecting segment.

In the above technical solution, by supporting the gathering part with the first connecting segment, the redundancy of the tab part can be improved, and the risk of short circuit caused by the reverse insertion of the active substance-coated part into the tab part can be reduced.

In some embodiments, the battery cell further includes a pressure relief device, the pressure relief device is disposed on the housing component, and the pressure relief device and the post terminal component are located on a same side or different sides.

In the above technical solution, the pressure relief device and the post terminal component are located on the same side. Thus, the design of other housing walls other than the second housing wall can be simplified, and the structure and processing of the battery cell can be simplified. The pressure relief device and the post terminal component are located on different sides. Thus, there is no need to reduce the volume of the post terminal component in view of the space occupied by the pressure relief device on the second housing wall, such that the shape and volume of the post terminal component can be flexibly designed as required.

In some embodiments, the post terminal component includes a post terminal body, an adapter structure, and an insulating and sealing structure, the adapter structure surrounds the post terminal body and is connected to the first housing wall, and the insulating and sealing structure is fitted between the adapter structure and the post terminal body in an insulating and sealing manner.

In the above technical solution, in addition to the post terminal body, the post terminal component further includes the adapter structure connected to the housing component, and the insulating and sealing structure serving an insulating and sealing function is disposed between the adapter structure and the post terminal body, such that when the post terminal component is mounted on the housing component and the adapter structure is connected to the housing component, no sealing member or the like needs to be disposed between the adapter structure and the housing component, and no large sealing pressure needs to be applied to meet the compression degree of the sealing member at this position. This can reduce the force received by the second housing wall or the cover plate and protect the housing component, thereby helping to reduce the wall thickness of the housing component and reducing material costs.

In some embodiments, the adapter structure is formed as an elongated strip extending in a length direction of the first housing wall, and a contour shape of the post terminal body matches a contour shape of the adapter structure; or the adapter structure is formed as an elongated strip extending in a length direction of the first housing wall, and the post terminal body is disposed at a central position of the adapter structure in the length direction and is circular.

In the above technical solution, the connection position between the adapter structure and the post terminal body is subjected to a uniform force, making it easy to control the compression amount of the insulating and sealing structure, thereby improving the reliability of the sealing fit between the adapter structure and the post terminal body.

In a second aspect, the embodiments of the present application further provide a battery. The battery includes the foregoing battery cell.

In the above technical solutions, during assembly of the battery cell, the assembly difficulty is low. After the cell component is inserted into the housing component, the cell component can be aligned with the housing body, thereby reducing the likelihood of the tab plates being pulled apart from the post terminal body, and improving the reliability of the battery.

In some embodiments, the battery includes a case assembly, a plurality of battery cells are provided and accommodated in the case assembly, a bottom of the case assembly is a case bottom plate, the housing component includes a cover plate covering an opening of the housing body, the opening of the housing body faces the case bottom plate, and the cover plate covers a bottom of the housing body; or the opening of the housing body faces away from the case bottom plate, and the cover plate covers a top of the housing body.

In the above technical solution, once thermal runaway occurs in a battery cell, pressure can be relieved from the bottom of the battery cell, allowing the central venting channel design to be eliminated, thereby further freeing up space for the battery cell. This is conducive to improving the energy density of the battery, and meanwhile, directional pressure relief can be quickly achieved, such that ejecta can be rapidly discharged in a specified direction through the optimal channel, making it less likely to spread to the surrounding cells.

In a third aspect, the embodiments of the present application further provide an electric device, which includes the foregoing battery cell or the foregoing battery.

In the above technical solutions, the electric device employs the above battery or battery cell. During assembly of the battery cell, the assembly difficulty is low. After the cell component is inserted into the housing component, the cell component can be aligned with the housing body, thereby reducing the likelihood of the tab plates being pulled apart from the post terminal body, improving the reliability of the battery, and helping to improve the performance of the electric device.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic structural diagram of a vehicle according to some embodiments of the present application;
FIG. 2 is an exploded view of a structure of a battery according to some embodiments of the present application;
FIG. 3 is a cross-sectional view of a battery cell according to some embodiments of the present application;
FIG. 4 is a partial cross-sectional view of a battery cell according to some embodiments of the present application;
FIG. 5 is a cross-sectional view of a housing body and a cover plate in a battery cell according to some embodiments of the present application;
FIG. 6 is a schematic diagram of a manufacturing process of a housing body according to some embodiments of the present application;
FIG. 7 is a cross-sectional view of a battery cell according to some other embodiments of the present application;
FIG. 8 is a cross-sectional view of a battery cell according to still some other embodiments of the present application;
FIG. 9 is a cross-sectional view of battery cells arranged side by side according to still some other embodiments of the present application;
FIG. 10 is a top view of a battery cell according to some embodiments of the present application;
FIG. 11 is a cross-sectional view along line A-A in FIG. 10;
FIG. 12 is a cross-sectional view of a battery cell according to yet some other embodiments of the present application;
FIG. 13 is a partial enlarged view of FIG. 12;
FIG. 14 is a partially enlarged view of portion A in FIG. 13;
FIG. 15 is a schematic structural diagram of a battery cell according to some embodiments of the present application; and
FIG. 16 is a schematic structural diagram of a cell component and a post terminal component in a battery cell according to some embodiments of the present application.

### Reference numerals:

battery cell 20;
housing component 21; cover plate 22;
cell component 23;
active substance-coated part 231; tab part 232; tab end part 2321; tab plate 233;
gathering part 234; electrode assembly 235; axial cross-section 236 of cell component; stacked part 237;
insulating member 238;
housing body 24;
open end 241; second housing wall 242; first housing wall 243; guiding part 244; guiding surface 2441;
outer side surface 2442; first section 2443; second section 2444; first transition corner 2445;
second transition corner 2446; mounting hole 249; accommodating cavity 204;
post terminal component 25;
post terminal body 251; inner end surface 2511 of post terminal body; adapter structure 252; insulating and sealing structure 253;
conductive part 26;
conductive member 261; first connecting segment 2611; clamping part 2612; second connecting segment 2613;
pressure relief device 27; rolled aluminum plate 30; busbar 40; U-shaped part 41; aluminum housing 50; clearance space 60;
battery 100; case assembly 10; first part 101; second part 102;
controller 200; motor 300; vehicle 1000; first direction F1; second direction F2.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, of the embodiments of the present application. Based on the embodiments in the present application, all other embodiments obtained by those of ordinary skill in the art without creative efforts shall fall within the scope of protection of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, solid-state batteries, or the like. This is not limited in the embodiments of the present application. The battery cell may be cylindrical, flat, rectangular parallelepiped-shaped, or in other shapes. This is also not limited in the embodiments of the present application.

The battery cell includes a housing, a cell component, and an electrolytic solution. The housing is configured to accommodate the cell component and the electrolytic solution (in a solid-state battery, the electrolytic solution may be a solid-state electrolyte layer located between positive and negative electrode plates). The cell component includes at least one electrode assembly. The electrode assembly is composed of a positive electrode plate, a negative electrode plate, and a separator (this structure can be omitted in the solid-state battery), and the electrode assembly may be of a wound structure, a stacked structure, or the like. The battery cell primarily works by the movement of metal ions between the positive electrode plate and the negative electrode plate.

The positive electrode plate may generally include a positive electrode current collector and a positive electrode active substance layer. The positive electrode active substance layer is directly or indirectly applied to the positive electrode current collector. The positive electrode current collector that is not coated with the positive electrode active substance layer protrudes from the positive electrode current collector coated with the positive electrode active substance layer. The positive electrode current collector that is not coated with the positive electrode active substance layer serves as a positive electrode tab plate. Taking lithium-ion batteries as an example, the material of the positive electrode current collector may be aluminum, and the material of the positive electrode active substance layer may be lithium cobaltate, lithium iron phosphate, ternary lithium, lithium manganate, or the like.

The negative electrode plate may generally include a negative electrode current collector and a negative electrode active substance layer. The negative electrode active substance layer is directly or indirectly applied on the negative electrode current collector, the negative electrode current collector not coated with the negative electrode active substance layer protrudes from the negative electrode current collector coated with the negative electrode active substance layer, and the negative electrode current collector not coated with the negative electrode active substance layer serves as a negative electrode tab plate. The material of the negative electrode current collector may be copper, and the material of the negative electrode active substance layer may be carbon, silicon, or the like. The material of the separator is not limited, and may be, e.g., polypropylene or polyethylene. In addition, the electrode assembly may be of a wound structure or a stacked structure, but the embodiments of the present application are not limited thereto.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

In the related art, during the manufacturing of a battery cell, a current collector is coated with an active substance layer and then cut to obtain an electrode plate consisting of a current collector coated with an active substance layer (referred to as an active substance-coated part) and a current collector not coated with an active substance layer (referred to as a tab plate). The positive and negative electrode plates and a separator are then stacked or wound in sequence to obtain an electrode assembly. In the electrode assembly, a plurality of tab plates are stacked to form a tab part. The tab part is connected to an adapter piece to form a conductive part, or the tab part itself forms a conductive part; the active substance-coated part and the conductive part form a cell component. The housing of the battery cell is provided with a post terminal. During the manufacturing of the battery cell, the conductive part is usually welded to the post terminal to ensure normal charging and discharging operations.

When the cell component is inserted into the housing body, the cell component is in a dry and compressed state. After the housing is filled with the electrolytic solution, the cell component absorbs the electrolytic solution and expands, resulting in an increase in thickness. Therefore, a dimension of the accommodating cavity of the housing body is usually greater than a dimension of the corresponding position of the cell component. However, since the dimension of the accommodating cavity of the housing is greater than the dimension of the corresponding position of the cell component, it is difficult to align the cell component with the housing body after the cell component is inserted into the housing; that is, the cell component is difficult to be properly centered within the housing body. When the cell component is not aligned with the housing body, an end of some tab plates connected to the active substance-coated part is more distal to the post terminal. When the cell component expands, such tab plates are prone to breakage after being pulled, resulting in degraded battery performance and poor consistency in the performance of the battery cell.

Based on the above considerations, to reduce the assembly difficulty of the cell component and enable the cell component to be aligned with the housing body after being inserted into the housing body, the present application provides a battery cell. The battery cell includes a housing component, a post terminal component, and a cell component. The housing component includes a housing body. An open end and a first housing wall are respectively formed at two opposite ends of the housing body. The first housing wall is provided with a mounting hole, a second housing wall is formed on at least one side, adjacent to the first housing wall, of the housing body, and a guiding part is disposed between the second housing wall and the first housing wall. The guiding part includes a guiding surface located within the housing body, and in a direction from the open end toward the first housing wall, a distance between the guiding surface and an inner wall surface of the second housing wall gradually increases. The post terminal component is mounted on the first housing wall and covers the mounting hole, and the post terminal component includes a post terminal body disposed opposite to the mounting hole. The cell component is accommodated in an accommodating cavity of the housing body and is connected to the post terminal body.

In the battery cell with such a structure, the guiding part is disposed between the first housing wall and the second housing wall, the guiding part includes the guiding surface located within the housing body, and after the cell component is inserted into the housing body, the cell component can cooperate with the guiding surface, such that the cell component can be centered within the housing body. Due to the limiting effect of the guiding surface, during assembly, the cell component can be centered within the housing body by directly placing the cell component in the housing body until the cell component is in contact with and cooperates with the guiding surface, thereby reducing the assembly difficulty, helping to increase the assembly speed, and ensuring the consistency in the relative positions between the cell component and the housing body. After the cell component is inserted into the housing body, the cell component is centered therein. Thus, the tab plates connected to the post terminal body exhibit good symmetry, and there will be no situation where the end of some tab plates connected to the active substance-coated part is excessively far away from the post terminal body, such that the tab plates are less likely to be subjected to excessive pulling when the cell component expands.

The embodiments of the present application provide an electric device using the battery cell disclosed herein as a power source. The electric device may be, but is not limited to, a mobile phone, a tablet, a laptop computer, an electric toy, an electric tool, an electric bike, an electric vehicle, a ship, a spacecraft, or the like. The electric toy may include stationary or mobile electric toys, such as game consoles, electric car toys, electric ship toys, and electric airplane toys. The spacecraft may include airplanes, rockets, space shuttles, spaceships, and the like.

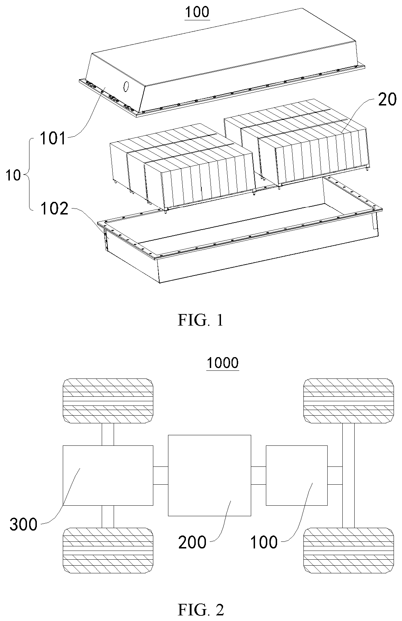

For ease of description, the following embodiments are illustrated by taking a vehicle as an example of the electric device according to an embodiment of the present application. Referring to FIG. 1, FIG. 1 is a schematic structural diagram of a vehicle as an electric device according to some embodiments of the present application. The vehicle may be a fuel vehicle, a gas vehicle, or a new energy vehicle. The new energy vehicle may be a pure electric vehicle, a hybrid vehicle, an extended-range vehicle, or the like. A battery 100 is disposed inside the vehicle, and the battery 100 may be disposed at the bottom, head, or rear of the vehicle. The battery 100 may be configured to supply power to the vehicle. For example, the battery 100 may serve as an operation power source for the vehicle. The vehicle may further include a controller 200 and a motor 300. The controller 200 is configured to control the battery 100 to supply power to the motor 300, e.g., for the operation power needed by the vehicle for start-up, navigation, and driving. In some embodiments of the present application, the battery 100 may not only serve as the operation power source for the vehicle, but also as a driving power source for the vehicle to, replacing or partially replacing fuel or natural gas, provide driving power for the vehicle.

Referring to FIG. 2, FIG. 2 is an exploded view of a battery 100 according to some embodiments of the present application. The battery 100 includes a case assembly 10 and battery cells 20. The battery cells 20 are accommodated in the case assembly 10.

The case assembly 10 is configured to provide an accommodating space for the battery cells 20, and the case assembly 10 may be of a variety of structures. In some embodiments, the case assembly 10 may include a first part 101 and a second part 102. The first part 101 and the second part 102 are lidded with each other, and the first part 101 and the second part 102 jointly define an accommodating space for accommodating the battery cells 20. The second part 102 may be of a hollow structure with one end open, and the first part 101 may be of a plate-shaped structure. An open side of the second part 102 is lidded with the first part 101, such that the first part 101 and the second part 102 jointly define the accommodating space. The first part 101 and the second part 102 may also both be of a hollow structure with one side open, and the open side of the second part 102 is lidded with an open side of the first part 101. Certainly, the case assembly 10 formed by the first part 101 and the second part 102 may be in various shapes, such as a cylinder and a rectangular parallelepiped.

The case assembly 10 can prevent liquid or other foreign matter from affecting the charging or discharging of the battery cells 20. Certainly, some other batteries 100 may not include the above case assembly 10 and are directly disposed in the battery mounting compartment of the electric device.

In the battery 100, a plurality of battery cells 20 may be provided, and the plurality of battery cells 20 may be connected in series, in parallel, or in series-parallel. The series-parallel connection means that both series connection and parallel connection are present for the connection among the plurality of battery cells 20. The plurality of battery cells 20 may be directly connected in series, in parallel, or in series-parallel, and then the whole formed by the plurality of battery cells 20 is accommodated in the case assembly 10. Certainly, the situation may be that in the battery 100, the plurality of battery cells 20 are first connected in series, in parallel, or in series-parallel to form battery modules, and then the plurality of battery 1 modules are connected in series, in parallel, or in series-parallel to form a whole and accommodated in the case assembly 10. The battery 100 may further include other structures. For example, the battery 100 may further include a busbar component for achieving an electrical connection among the plurality of battery cells 20.

The battery cell 20 according to the embodiments of the present application is described below with reference to the drawings.

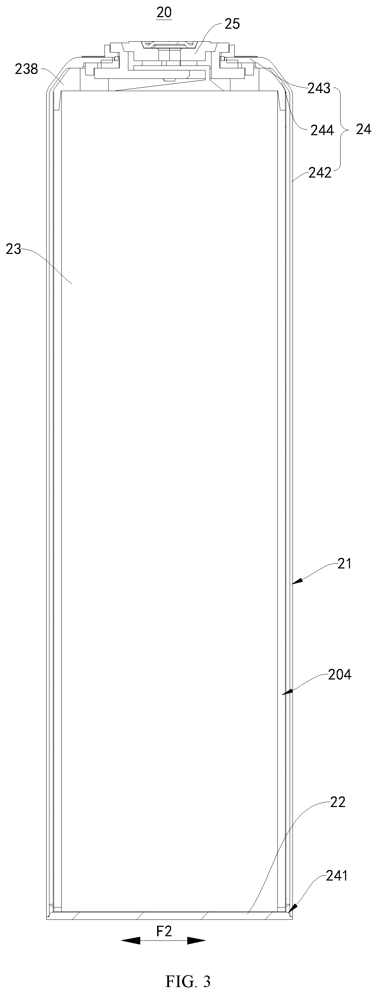

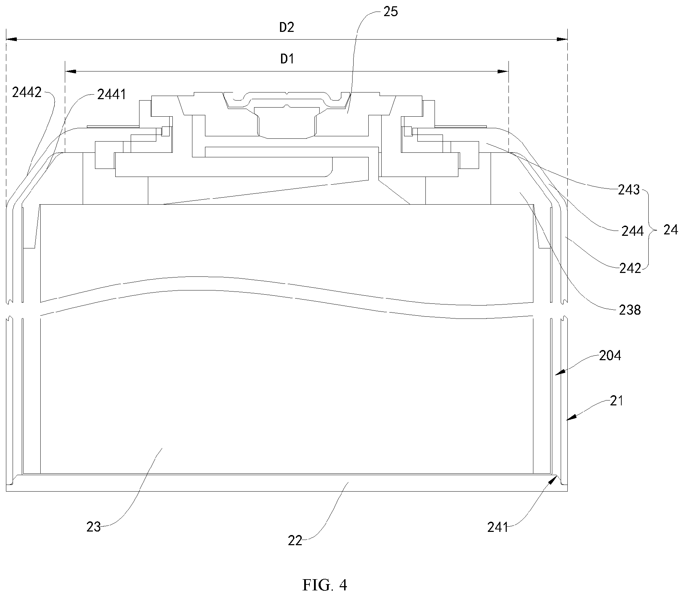

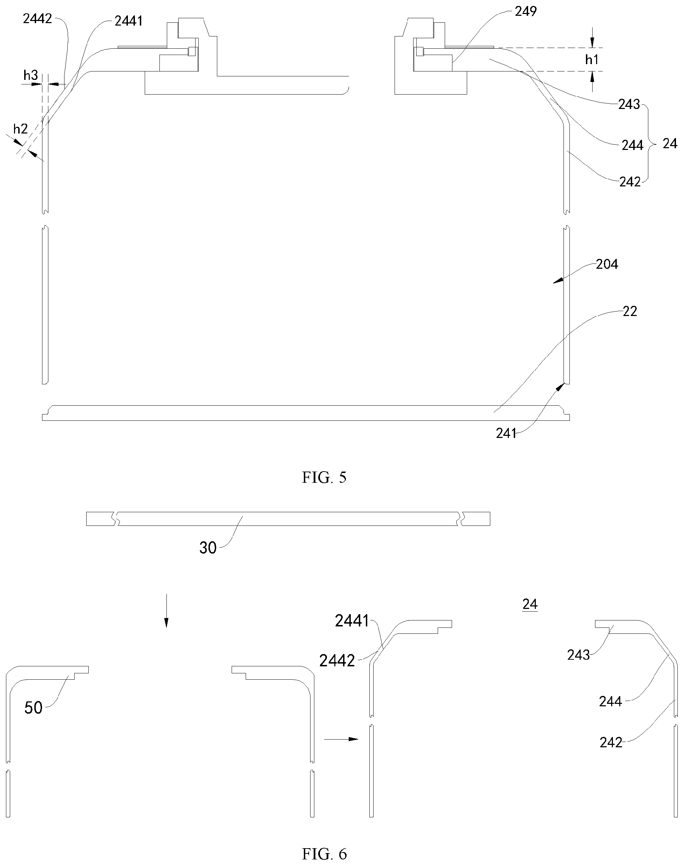

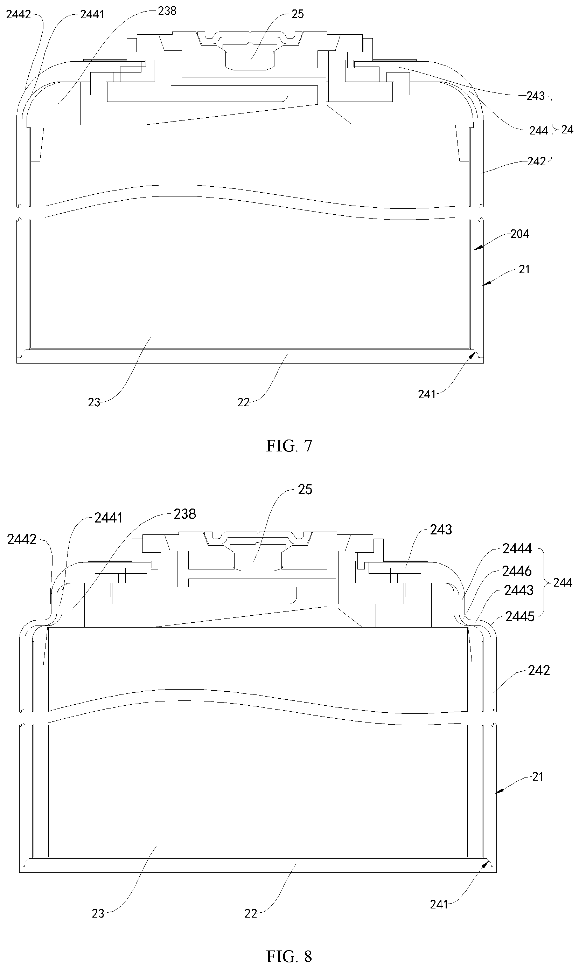

Referring to FIGs. 3 to 8, FIG. 3 is a cross-sectional view of a battery cell according to some embodiments of the present application; FIG. 4 is a partial cross-sectional view of a battery cell according to some embodiments of the present application; FIG. 5 is a cross-sectional view of a housing body 24 and a cover plate 22 in a battery cell according to some embodiments of the present application; FIG. 6 is a schematic diagram of a manufacturing process of a housing body according to some embodiments of the present application; FIG. 7 is a cross-sectional view of a battery cell according to some other embodiments of the present application; and FIG. 8 is a cross-sectional view of a battery cell according to still some other embodiments of the present application.

The battery cell 20 includes a housing component 21, a post terminal component 25, and a cell component 23. The housing component 21 includes a housing body 24. An open end 241 and a first housing wall 243 are respectively formed at two opposite ends of the housing body 24. The first housing wall 243 is provided with a mounting hole 249, a second housing wall 242 is formed on at least one side, adjacent to the first housing wall 243, of the housing body 24, and a guiding part 244 is disposed between the second housing wall 242 and the first housing wall 243. The guiding part 244 includes a guiding surface 2441 located within the housing body 24, and in a direction from the open end 241 toward the first housing wall 243, a distance between the guiding surface 2441 and an inner wall surface of the second housing wall 242 gradually increases. The post terminal component 25 is mounted on the first housing wall 243 and covers the mounting hole 249, and the post terminal component 25 includes a post terminal body 251 disposed opposite to the mounting hole 249. The cell component 23 is accommodated in an accommodating cavity 204 of the housing body 24 and is connected to the post terminal body 251.

Illustratively, the second housing wall 242 may be integrally formed with the first housing wall 243. In this way, the housing body 24 exhibits good structural integrity, is less prone to fatigue cracking at the joint between the first housing wall 243 and the second housing wall 242, and is easy to manufacture. In addition, the second housing wall 242 may be formed separately from the first housing wall 243, and the second housing wall 242 and the first housing wall 243 may be welded or connected via a fastener. During assembly, the first housing wall 243 and the second housing wall 242 are first connected to form the housing body 24, and then the cell component 23 is inserted into the housing body 24.

Illustratively, referring to FIGs. 3, 4, 5, 7, and 8, the housing component 21 may include a housing body 24 and a cover plate 22. One end of the housing body 24 is an open end 241, the open end 241 is lidded with the cover plate 22, and the housing body 24 and the cover plate 22 jointly define, in an enclosing manner, the accommodating cavity 204. Alternatively, illustratively, the housing component 21 may include two housing bodies 24. One end of each housing body 24 is provided with an open end 241. The open ends 241 of the two housing bodies 24 are opposite to and mutually lidded with each other, and the two housing bodies 24 jointly define, in an enclosing manner, the accommodating cavity 13.

Specifically, a wall surface, located outside the housing body 24, of the guiding part 244 may be parallel to the guiding surface 2441 or may not be parallel to the guiding surface 2441. The guiding surface 2441 between the second housing wall 242 and the first housing wall 243 on one side may be an inclined plane or an arc-shaped surface, or may include a plurality of surfaces that extend in different directions and are arranged continuously. In the direction from the open end 241 toward the first housing wall 243, the distance between the guiding surface 2441 and the inner wall surface of the second housing wall 242 gradually increases. This includes that the distance between the entire guiding surface 2441 and the inner wall surface of the second housing wall 242 increases in a linear or nonlinear trend; or only part of the distance between the guiding surface 2441 and the inner wall surface of the second housing wall 242 increases in a linear or nonlinear trend, while the other part of the distance between the guiding surface 2441 and the inner wall surface of the second housing wall 242 remains unchanged.

The cell component 23 may include one electrode assembly 235, or may include a plurality of electrode assemblies 235. The plurality of electrode assemblies 235 are arranged side by side in the accommodating cavity 204 of the housing body 24. The housing body 24 may be made of aluminum alloy, steel, aluminum-plastic film, plastic, or other materials resistant to electrolytic solution corrosion, which may be designed and selected based on requirements in practice.

In some embodiments, the guiding surface 2441 has a relatively large dimension, and the tab part 232 of the cell component 23 is relatively short. The guiding surface 2441 can guide the cell component 23 during the insertion of the cell component into the housing body 24, thereby enabling the tab part 232, or the tab part 232 and the post terminal body 251 connected to the tab part 232, to be moved into the mounting hole 249 in a direction facing the mounting hole 249, i.e., facilitating the smooth insertion of the tab part 232 and the post terminal body 251 into the mounting hole 249.

The cell component 23 includes an electrode assembly 235. The electrode assembly 235 directly cooperates with the guiding surface 2441 of the guiding part 244, such that the cell component 23 can be located at a central position within the housing body 24. Alternatively, the cell component 23 includes an electrode assembly 235 and an insulating member 238. The insulating member 238 is disposed between the first housing wall 243 and the electrode assembly 235 to separate the housing body 24 from the electrode assembly 235. After the cell component 23 is inserted into the housing body 24, the insulating member 238 cooperates with the guiding part 244.

In the battery cell 20 according to the embodiments of the present application, the guiding part 244 is disposed between the first housing wall 243 and the second housing wall 242, the guiding part 244 includes the guiding surface 2441 located within the housing body 24, and after the cell component 23 is inserted into the housing body 24, the cell component 23 can cooperate with the guiding surface 2441, such that the cell component 23 can be centered within the housing body 24. Due to the limiting effect of the guiding surface 2441, during assembly, the cell component 23 can be centered within the housing body 24 by directly placing the cell component 23 in the housing body 24 until the cell component 23 is in contact with and cooperates with the guiding surface 2441, thereby reducing the assembly difficulty, helping to increase the assembly speed, and ensuring the consistency in the relative positions between the cell component 23 and the housing body 24. After the cell component 23 is inserted into the housing body 24, the cell component is centered therein. Thus, the tab plates 233 connected to the post terminal body 251 exhibit good symmetry, and there will be no situation where the end of some tab plates 233 connected to an active substance-coated part 231 is excessively far away from the post terminal body 251, such that the tab plates 233 are less likely to be subjected to excessive pulling when the cell component 23 expands.

In some optional embodiments of the present application, referring to FIGs. 4, 5, 7, and 8, the second housing wall 242 is formed on at least two sides, adjacent to the first housing wall 243, of the housing body 24.

For example, the housing body 24 has a first direction F1 and a second direction F2 that are parallel to an outer wall surface of the first housing wall 243, and a dimension of the first housing wall 243 in the first direction F1 is greater than a dimension of the first housing wall 243 in the second direction F2, where the second housing wall 242 is formed by side walls, adjacent to the first housing wall 243 and located on both sides in the first direction F1, of the housing body 24; or the second housing wall 242 is formed by side walls, adjacent to the first housing wall 243 and located on both sides in the second direction F2, of the housing body 24; or the second housing wall 242 is formed by side walls, adjacent to the first housing wall 243 and located on both sides in the first direction F1, of the housing body 24, and by side walls, adjacent to the first housing wall 243 and located on one side in the second direction F2, of the housing body 24; or the second housing wall 242 is formed by side walls, adjacent to the first housing wall 243 and located on one side in the first direction F1, of the housing body 24, and by side walls, adjacent to the first housing wall 243 and located on both sides in the second direction F2, of the housing body 24; or the second housing wall 242 is formed by side walls, adjacent to the first housing wall 243 and located on both sides in the first direction F1, of the housing body 24, and by side walls, adjacent to the first housing wall 243 and located on both sides in the second direction F2, of the housing body 24; or the second housing wall 242 is formed on one side, adjacent to the first housing wall 243 and located on one side in the first direction F1, of the housing body 24, and on one side, adjacent to the first housing wall 243 and located on one side in the second direction F2, of the housing body 24.

The battery cell 20 may be in the shape of a rectangular parallelepiped. A length direction of the battery cell 20 is the first direction F1, and a thickness direction of the battery cell 20 is the second direction F2. However, the present application is not limited thereto. In other embodiments of the present application, the battery cell 20 may also be cylindrical, flat, or in other shapes.

The second housing wall 242 is formed on at least two sides, adjacent to the first housing wall 243, of the housing body 24. That is, the guiding parts 244 are formed on at least two sides of the first housing wall 243, and the guiding parts 244 on the two sides can cooperate with the cell component 23 to limit at least two sides of the cell component 23, such that the limiting is more stable and the position of the cell component 23 is less likely to shift, thereby allowing the cell component to be stably centered within the housing body 24.

In some optional embodiments of the present application, the housing body 24 has a first direction F1 and a second direction F2 that are parallel to an outer wall surface of the first housing wall 243, the dimension of the first housing wall 243 in the first direction F1 is greater than the dimension of the first housing wall 243 in the second direction F2, and the second housing wall 242 is formed at both ends of the housing body 24 in the first direction F1 and at both ends of the housing body in the second direction F2.

That is, the guiding parts 244 are provided on both sides of the first housing wall 243 in the first direction F1 and both sides of the first housing wall 243 in the second direction F2. Thus, after the cell component 23 is inserted into the housing, the guiding parts 244 around the housing component 21 can all limit the position of the cell component 23, such that the limiting is more stable and the cell component 23 is less likely to tilt, resulting in a good limiting effect. This facilitates the centered and symmetrical arrangement of the cell component 23 within the housing component 21, and the cell component 23 is less likely to tilt in both the first direction F1 and the second direction F2.

In some optional embodiments of the present application, referring to FIG. 4 again, in a direction perpendicular to the second housing wall 242, a dimension D1 of the first housing wall 243 is less than a distance D2 between the second housing wall 242 and another opposite housing wall, and the first housing wall 243 is connected to the second housing wall 242 via the guiding part 244.

For example, if second housing walls 242 are formed on both sides, adjacent to the first housing wall 243 and located in the first direction F1, of the housing body 24, the distance between the second housing walls 242 on both sides in the first direction F1 is greater than the dimension of the first housing wall 243 in the first direction F1. That is, compared with a configuration in which the second housing wall is directly connected to the first housing wall, the dimension D1 of the first housing wall 243 connected to the second housing wall 242 via the guiding part 244 is smaller in the direction perpendicular to the second housing wall 242.

It should be noted that the dimension D1 of the first housing wall 243 is smaller, such that the first housing wall 243 has good structural strength. The post terminal component 25 is mounted on the first housing wall 243, and the deflection during pull-out and post terminal push-twist is small, making deformation less likely to occur. Higher strength is achieved when the post terminal component 25 is riveted to the first housing wall 243, such that the joint between the first housing wall 243 and the post terminal component 25 is less prone to damage. Alternatively, on the premise of meeting the pull-out and post terminal push-and-twist strength, the thickness of the first housing wall 243 can be reduced to improve the energy density and reduce the weight of the battery cell 20.

In some optional embodiments of the present application, referring to FIG. 5, a wall thickness h2 of the guiding part 244 and a wall thickness h3 of the second housing wall 242 are less than a wall thickness h1 of the first housing wall 243.

For example, the wall thickness h2 of the guiding part 244 may be equal to the wall thickness h3 of the second housing wall 242, or may be greater than the wall thickness h3 of the second housing wall 242 or less than the wall thickness h3 of the second housing wall 242. For example, the wall thickness h2 of the guiding part 244 is 0.8 times the wall thickness of the second housing wall 242, or the wall thickness h2 of the guiding part 244 is 1.2 times the wall thickness h3 of the second housing wall 242, which is not specifically limited herein.

It should be noted that the first housing wall 243 needs to be provided with the post terminal component 25. Therefore, the wall thickness h1 of the first housing wall 243 is relatively large, so as to ensure sufficient structural strength. As a result, the deflection during pull-out and post terminal push-twist is small, making deformation less likely to occur, and providing sufficient connection strength between the first housing wall and the post terminal component 25, thereby reducing the possibility of detachment and loosening of the post terminal component 25. However, the second housing wall 242 and the guiding part 244 are mainly configured to define the accommodating cavity 204 for accommodating the cell component 23, and thus can be thin, so as to reduce the weight of the battery cell 20 and improve the energy density of the battery.

In some optional embodiments of the present application, referring to FIGs. 3 to 6, the guiding surface 2441 is configured as an inclined surface.

That is, the guiding surface 2441 is an inclined plane. Referring to FIG. 6, when processing the housing body 24 with the guiding surface 2441 of the guiding part 244 being an inclined surface, a rolled aluminum plate 30 may be first stretched to form an aluminum housing 50, and then the position corresponding to the aluminum housing 50 is extruded to form the housing body 24 having the guiding part 244, the guiding surface 2441 of which is an inclined surface. By employing a stepwise stretching method, the possibility of stretching-induced rupture of the housing body 24 during manufacturing can be reduced, thereby improving the manufacturability.

The guiding surface 2441 is configured as an inclined surface. In this way, the structure of the guiding surface 2441 is relatively simple, thereby facilitating processing, lowering the processing difficulty, and lowering the manufacturing cost. In addition, during mounting, the cell component 23 can easily and quickly cooperate with the guiding surface 2441, thereby reducing the mounting difficulty.

In some optional embodiments of the present application, referring to FIGs. 3 to 6, the guiding part 244 is provided with an outer side surface 2442 located outside the housing body 24, and the outer side surface 2442 is parallel to the guiding surface 2441.

That is, the thickness of each part of the guiding part 244 is consistent. In some other embodiments, the outer side surface 2442, located outside the housing body 24, of the guiding part 244 may not be parallel to the guiding surface 2441. For example, the outer side surface 2442, located outside the housing body 24, of the guiding part 244 includes a first wall surface coplanar with the outer side surface 2442, located outside the housing body 24, of the first housing wall 243 and a second wall surface coplanar with the outer side surface 2442, located outside the housing body 24, of the second housing wall 242. Alternatively, the guiding surface 2441 is an inclined surface, and the outer side surface 2442, located outside the housing body 24, of the guiding part 244 is an arc-shaped surface.

The outer side surface 2442 of the guiding part 244 is parallel to the guiding surface 2441. In this way, in one aspect, the processing is convenient, and forming can be achieved by extrusion or stretching, resulting in strong manufacturability; in another aspect, the weight of the guiding part 244 can be made as light as possible, thereby reducing the weight of the housing body 24, and helping to improve the energy density of the battery 100.

In some optional embodiments of the present application, referring to FIG. 5, a spacing between the outer side surface 2442 and the guiding surface 2441 is equal to the wall thickness h3 of the second housing wall 242.

Here, only part of the spacing between the outer side surface 2442 and the guiding surface 2441 may be equal to the wall thickness h3 of the second housing wall 242. Alternatively, the outer side surface 2442 is parallel to the guiding surface 2441, and the wall thickness h2 of the guiding part 244 is equal to the wall thickness h3 of the second housing wall 242.

The guiding part 244 is connected between the second housing wall 242 and the first housing wall 243. If the wall thickness h2 of the guiding part 244 is too small, the fatigue resistance of the guiding part 244 is poor, which affects the service life of the battery cell 20. If the wall thickness h2 of the guiding part 244 is too large, the weight of the housing body 24 is increased, thereby reducing the energy density of the battery cell 20. In addition, a thickness difference exists between the guiding part 244 and the second housing wall 242, and the junction between the guiding part 244 and the second housing wall 242 is prone to breakage. Therefore, in the embodiments, the spacing between the outer side surface 2442 and the guiding surface 2441 is equal to the wall thickness h3 of the second housing wall 242. In this way, the guiding part 244 and the second housing wall 242 are less prone to breakage, the guiding part 244 exhibits good fatigue resistance, and the energy density of the battery cell 20 is high.

In some optional embodiments of the present application, referring to FIG. 7, the guiding surface 2441 is configured as a circular arc surface, and the radius of the guiding surface 2441 is R, where 5 mm ≤ R ≤ 9 mm.

For example, the radius of the guiding surface 2441 may be 5 mm, 6 mm, 7 mm, 8 mm, 9 mm, or any value between any two of the foregoing values.

If the radius of the guiding surface 2441 is too small, the limiting effect on the cell component 23 is poor. After the cell component 23 cooperates with the guiding surface 2441, the cell component 23 is still prone to tilting relative to the housing body 24 and cannot be well centered within the housing body 24. If the radius of the guiding surface 2441 is too large, the internal space of the housing body 24 will be excessively reduced, such that the space inside the housing body 24 for accommodating the cell component 23 is reduced, which is not conducive to improving the energy density of the battery 100. Allowing the radius of the guiding surface 2441 to be within the range can better ensure that the cell component 23 is well centered within the housing body 24 without significantly affecting the energy density of the battery 100.

In some optional embodiments of the present application, referring to FIG. 7 again, the guiding part 244 is provided with an outer side surface 2442 located outside the housing body 24, and the outer side surface 2442 is configured as a circular arc surface.

For example, the outer side surface 2442 of the guiding part 244 is a circular arc surface, and the inner side surface of the guiding part 244 is an inclined surface; or both the outer side surface 2442 of the guiding part 244 and the inner side surface of the guiding part 244 are circular arc surfaces. The outer side surface 2442 of the guiding part 244 is a circular arc surface; that is, the outer side surface 2442 of the guiding part 244 does not have edges and corners. The stress at all parts of the guiding part 244 is relatively uniform, making it less prone to deformation and resulting in a more aesthetically pleasing appearance.

In an embodiment in which both the outer side surface 2442 and the inner side surface of the guiding part 244 are circular arc surfaces, during the forming process of the guiding part 244, the housing body 24 may be directly extruded or bent to form the guiding part 244, thereby featuring low manufacturing difficulty and facilitating fabrication. The guiding surface 2441 in the form of a circular arc surface can limit the position of the cell component 23. After the cell component 23 is inserted into the housing body 24, the cell component 23 can cooperate with the guiding surface 2441, such that the cell component 23 can be centered within the housing body 24.

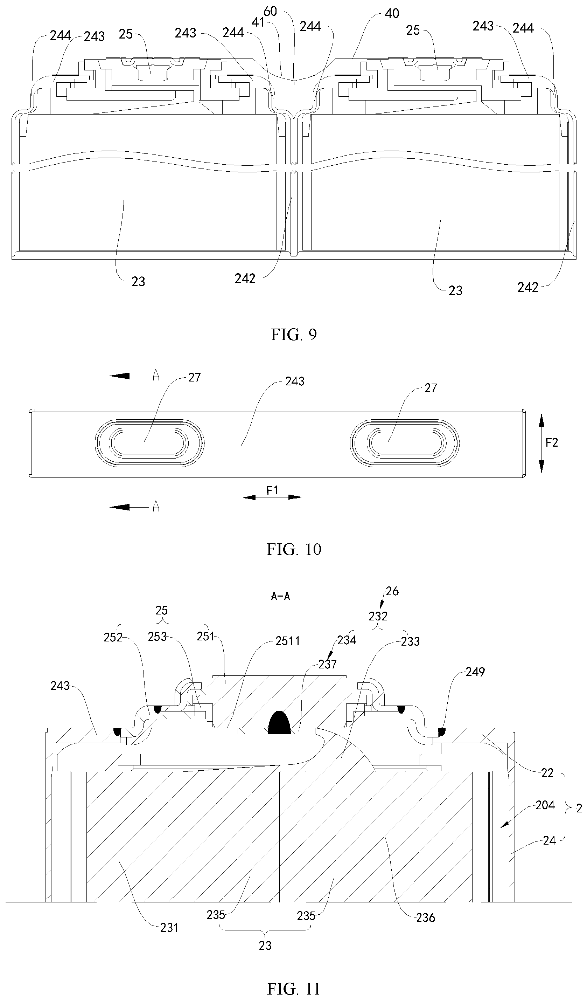

It should be noted that the post terminal components 25 of a plurality of battery cells 20 are electrically connected to each other via a busbar or a metal sheet (e.g., a busbar 40 in FIG. 9). During the operation of the battery cells 20, expansion and contraction of the battery cells 20 are inevitable. Therefore, the busbar 40 is typically provided with a U-shaped part 41. When the battery cell 20 expands, the U-shaped part 41 is stretched into a U-shaped part with a smaller curvature, and when the battery cell contracts, the U-shaped part 41 becomes a U-shaped part with a larger curvature. In the related art, the height of the post terminal component is usually set to be high, such that a space for accommodating the U-shaped part is formed between adjacent post terminal components, which will increase the height and weight of the battery cell.

On the premise that the outer side surface 2442 of the guiding part 244 is an inclined surface or a circular arc surface, when adjacent battery cells 20 are arranged side by side and the outer side surfaces 2442 of the guiding parts 244 of adjacent battery cells 20 are arranged opposite to each other, the outer side surfaces 2442 of the guiding parts 244 of the adjacent battery cells 20 define a clearance space 60, and the clearance space 60 can accommodate the U-shaped part 41. Thus, the height of the post terminal component 25 can be made relatively low, which is conducive to reducing the mass and volume of the battery cells 20 and improving the energy density of the battery 100.

In some optional embodiments of the present application, referring to FIG. 7, the spacing between the outer side surface 2442 and the guiding surface 2441 gradually increases in the direction from the open end 241 toward the first housing wall 243.

For example, the guiding surface 2441 and the outer side surface 2442 of the guiding part 244 are both circular arc surfaces, the radius of the circular arc surface of the guiding surface 2441 is greater than the radius of the guiding surface 2441 of the guiding part 244, and the center of the guiding surface 2441 is closer to the inner side than the center of the guiding part 244. An end of the guiding part 244 with a larger wall thickness h2 is connected to the first housing wall 243, and an end of the guiding part 244 with a smaller wall thickness h2 is connected to the second housing wall 242. In this way, the difference in wall thickness at the joint between the guiding part 244 and the first housing wall 243 is not excessively large, and the difference in wall thickness at the joint between the guiding part 244 and the second housing wall 242 is not excessively large. In one aspect, the structural strength of the guiding part 244 is higher, and the joint between the guiding part 244 and the first housing wall 243 and the joint between the guiding part 244 and the second housing wall 242 are less prone to breakage. In another aspect, the manufacturing difficulty of the housing body 24 can be reduced, and the manufacturability of the housing body 24 is improved.

In some optional embodiments of the present application, the minimum spacing between the outer side surface 2442 and the guiding surface 2441 is equal to the wall thickness h3 of the second housing wall 242.

In an embodiment in which the spacing between the outer side surface 2442 and the guiding surface 2441 gradually increases in the direction from the open end 241 toward the first housing wall 243, the minimum spacing between the outer side surface 2442 and the guiding surface 2441 is equal to the wall thickness h3 of the second housing wall 242. That is, the wall thickness of an end of the guiding part 244 connected to the second housing wall 242 is equal to the wall thickness h3 of the second housing wall 242. In this way, no abrupt thickness change occurs between the second housing wall 242 and the guiding part 244, the structural strength of the guiding part 244 is higher, and better integration is achieved among the guiding part 244, the first housing wall 243, and the second housing wall 242.

In some embodiments, in the direction from the open end 241 toward the first housing wall 243, the wall thickness h2 of the guiding part 244 gradually increases. For example, the wall thickness of an end of the guiding part 244 connected to the first housing wall 243 is equal to the wall thickness h1 of the first housing wall 243, and the wall thickness of the end of the guiding part 244 connected to the second housing wall 242 is equal to the wall thickness h3 of the second housing wall 242. In this way, no abrupt thickness change occurs between the first housing wall 243 and the guiding part 244 and between the second housing wall 242 and the guiding part 244, the structural strength of the guiding part 244 is higher, and better integration is achieved among the guiding part 244, the first housing wall 243, and the second housing wall 242.

In some optional embodiments of the present application, referring to FIGs. 8 and 9, FIG. 9 is a cross-sectional view of battery cells arranged side by side according to still some other embodiments of the present application. The guiding part 244 includes at least two sections. In a direction from the second housing wall 242 toward the first housing wall 243, the at least two sections are sequentially connected, and a latter section is closer to the mounting hole 249 than a former section. Any two adjacent sections are arranged at an included angle, and at least a section of the at least two sections proximal to the first housing wall 243 is provided with the guiding surface 2441.

For example, the guiding part 244 may include two connected sections, or may include three sections, or may include four sections, or the like, which is not specifically limited herein. In an embodiment in which the guiding part 244 includes two sections, the section proximal to the first housing wall 243 is provided with a guiding surface 2441, or each of the two sections is provided with a guiding surface 2441. In an embodiment in which the guiding part 244 includes three sections, only one section may be provided with a guiding surface 2441, or two sections may be provided with guiding surfaces 2441, or three sections may be provided with guiding surfaces 2441. In an embodiment in which a plurality of guiding surfaces 2441 are provided, the plurality of guiding surfaces 2441 may be connected or may not be connected to each other.

Any two adjacent sections are arranged at an included angle. For example, an included angle between outer side surfaces 2442 of the two sections may be 90 degrees, 100 degrees, 110 degrees, 120 degrees, 130 degrees, 140 degrees, 150 degrees, 160 degrees, 170 degrees, or the like.

The arrangement of the guiding surface 2441 can limit the position of the cell component 23. After the cell component 23 is inserted into the housing body 24, the cell component 23 can cooperate with the guiding surface 2441, such that the cell component 23 can be centered within the housing body 24.

It should be noted that the post terminal components 25 of a plurality of battery cells 20 are electrically connected to each other via a busbar or a metal sheet (e.g., a busbar 40 in FIG. 9). During the operation of the battery cells 20, expansion and contraction of the battery cells 20 are inevitable. Therefore, the busbar 40 is typically provided with a U-shaped part 41. When the battery cell 20 expands, the U-shaped part 41 is stretched into a U-shaped part with a smaller curvature, and when the battery cell contracts, the U-shaped part 41 becomes a U-shaped part with a larger curvature. In the related art, the height of the post terminal component is usually set to be high, such that a space for accommodating the U-shaped part is formed between adjacent post terminal components, which will increase the height and weight of the battery cell.

In the embodiments of the present application, the guiding part 244 including at least two sections is provided, and the two sections are arranged at an included angle. In this way, when two battery cells 20 are arranged side by side, the outer side surfaces 2442 of two guiding parts 244 of the two battery cells 20 define the clearance space 60 to accommodate the U-shaped part 41. Thus, the height of the post terminal component 25 can be made relatively low, which is conducive to reducing the mass and volume of the battery cells 20 and improving the energy density of the battery 100. In addition, the clearance space 60 formed by the guiding part 244 including at least two sections is larger, and can avoid some other components according to design requirements.

In some optional embodiments of the present application, two sections are provided, namely a first section 2443 and a second section 2444. The first section 2443 is perpendicular to the second housing wall 242, the second section 2444 is perpendicular to the first section 2443, the second section 2444 is connected to the first housing wall 243, and the second section 2444 is provided with a guiding surface 2441.

In one aspect, the guiding part 244 including the first section 2443 and the second section 2444 can limit the position of the cell component 23. After the cell component 23 is inserted into the housing body 24, the cell component 23 can cooperate with the guiding surface 2441, such that the cell component 23 can be centered within the housing body 24. In another aspect, the guiding part 244 including only the first section 2443 and the second section 2444 has a relatively simple structure, is easy to process and form, and is less prone to deformation.

In some optional embodiments of the present application, referring to FIG. 8, a first transition corner 2445 is provided between the first section 2443 and the second housing wall 242, and a second transition corner 2446 is provided between the second section 2444 and the first section 2443.

For example, a first transition chamfer or a first transition fillet may be provided between an inner wall surface of the first section 2443 and the inner wall surface of the second housing wall 242, a first transition chamfer or a first transition fillet may be provided between an outer wall surface of the first section 2443 and an outer wall surface of the second housing wall 242, a second transition chamfer or a second transition fillet may be provided between an inner wall surface of the second section 2444 and the inner wall surface of the first section 2443, a second transition chamfer or a second transition fillet may be provided between an outer wall surface of the second section 2444 and the outer wall surface of the first section 2443, a third transition chamfer or a third transition fillet may be provided between the inner wall surface of the second section 2444 and an inner wall surface of the first housing wall 243, and a third transition chamfer or a third transition fillet may be provided between the outer wall surface of the second section 2444 and the outer wall surface of the first housing wall 243.

Thus, smooth transitions can be achieved between the first section 2443 and the second housing wall 242, between the first section 2443 and the second section 2444, and between the second section 2444 and the first housing wall 243, thereby facilitating processing, providing strong manufacturability, and enabling integral forming, while also reducing the stress at the joint between the first section 2443 and the second housing wall 242, the joint between the second section 2444 and the first section 2443, and the joint between the second section 2444 and the first housing wall 243.

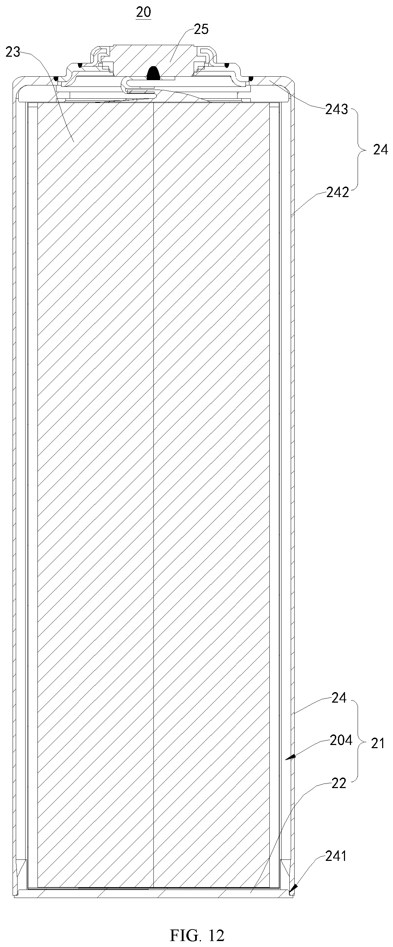

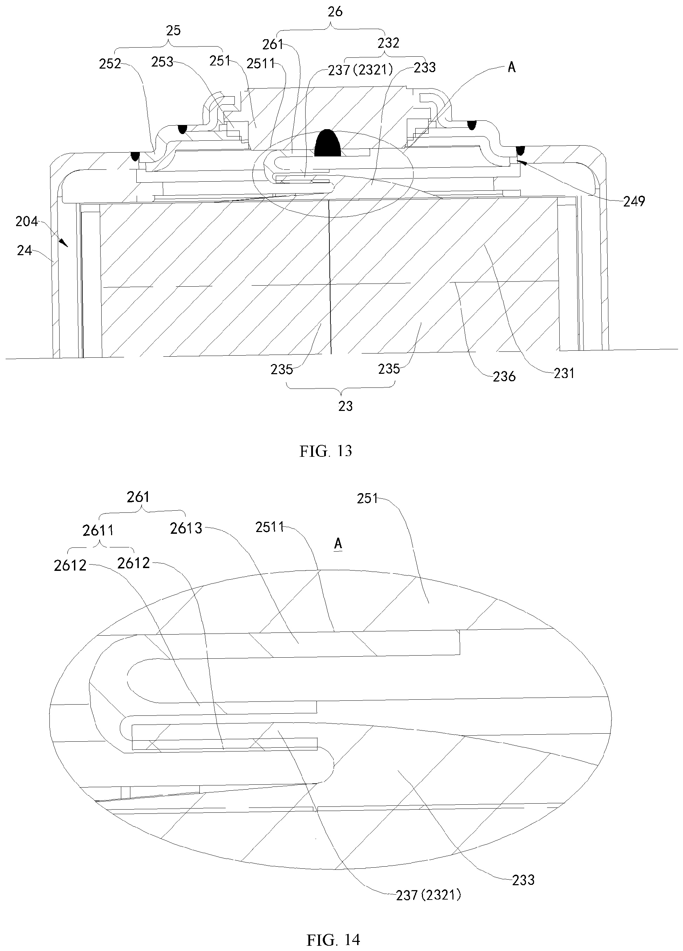

According to some embodiments of the present application, reference may be made to FIGs. 10 to 13. FIG. 10 is a top view of a battery cell according to some embodiments of the present application; FIG. 11 is a cross-sectional view along line A-A in FIG. 10; FIG. 12 is a cross-sectional view of a battery cell according to yet some other embodiments of the present application; and FIG. 13 is a partially enlarged view of FIG. 12. A surface of the post terminal body 251 on an end facing the cell component 23 (i.e., a surface on a side facing the active substance-coated part 231) is an inner end surface 2511 of the post terminal body, and the cell component 23 is connected to the inner end surface 2511 of the post terminal body via a conductive part 26 (e.g., the tab part 232 or a conductive member 261).

An electrode component includes one or more electrode assemblies 235. In the electrode assembly 235, the part of the current collector coated with the active substance layer forms the active substance-coated part 231, and the part of the current collector not coated with the active substance layer forms the tab part 232.

Thus, the difficulty of assembling and connecting the conductive part 26 to the post terminal body 251 can be reduced, the processing efficiency can be improved, and the reduction in the length of the conductive part 26 can be facilitated, thereby saving materials and costs.

According to some embodiments of the present application, referring to FIGs. 11 and 13 again, at least part of the conductive part 26 is laid on the inner end surface 2511 of the post terminal body. In this way, by laying at least part of the conductive part 26 on the inner end surface 2511 of the post terminal body, the at least part of the conductive part 26 is in a flattened and spread-out state, and the projection of the at least part of the conductive part 26 falls on the inner end surface 2511 of the post terminal body. This helps to improve the connection reliability between the conductive part 26 and the post terminal body 251, and helps to increase the connection area between the conductive part 26 and the post terminal body 251, thereby improving the electrical conductivity.

Referring to the figures again, illustratively, when the battery cell 20 is in an assembled state (for example, as shown in FIGs. 21 and 23), the inner end surface of the post terminal body 251 is parallel to an axial cross-section 236 of the cell component, the tab-out direction of the cell component 23 is the direction in which the active substance-coated part 231 extends out of the tab part 232, and this direction is perpendicular to the first housing wall 242. Thus, the processing and design of the post terminal body 251 are facilitated.

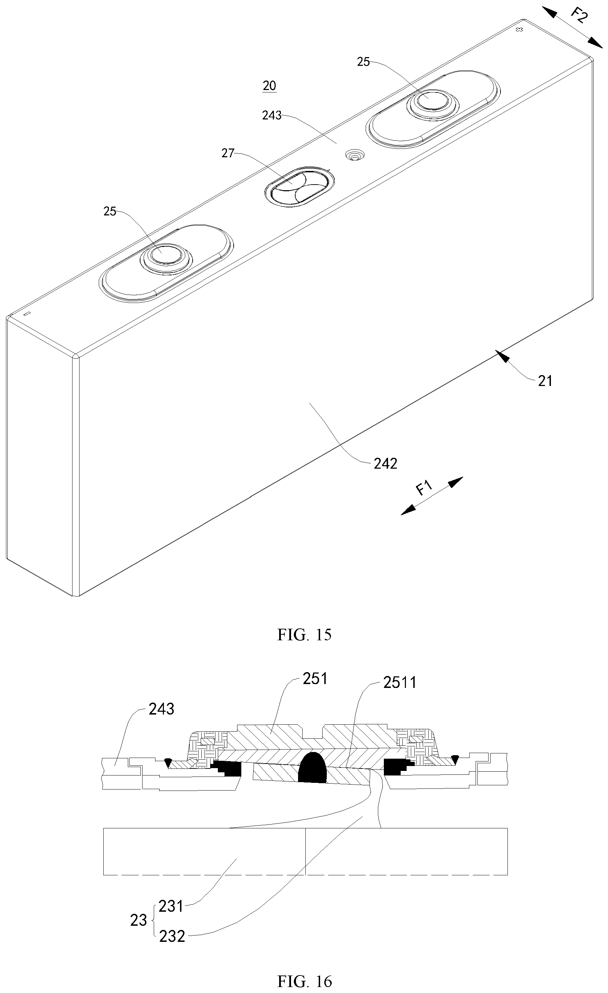

According to some embodiments of the present application, when the battery cell 20 is in an assembled state (for example, as shown in FIG. 16, which is a schematic structural diagram of a cell component and a post terminal component in a battery cell according to some embodiments of the present application), the inner end surface 2511 of the post terminal body is inclined relative to the axial cross-section 236 of the cell component, and the axial cross-section 236 of the cell component is perpendicular to the tab-out direction of the cell component 23.

The tab-out direction of the cell component 23 is the direction in which the active substance-coated part 231 extends out of the tab part 232, and this direction is perpendicular to the first housing wall 242. In this way, before at least part of the conductive part 26 is laid on the inner end surface of the post terminal body 251, the post terminal component 25 may be first adjusted such that the inner end surface of the post terminal body 251 is parallel to the tab-out direction of the cell component 23, thereby facilitating the laying of at least part of the conductive part 26 on the inner end surface of the post terminal body 251, and providing a relatively large welding operation space. In this case, the direction of a line connecting two ends of the post terminal body 251 (i.e., an end proximal to the cell component 23 and an end distal to the cell component 23) is inclined toward the tab-out direction of the cell component 23. Thus, after the conductive part 26 is connected to the post terminal body 251, the post terminal component 25 only needs to be flipped by less than 90° as a whole to make the direction of the line connecting the two ends of the post terminal body 251 parallel to the second housing wall 243 or the cover plate 22. Compared with the solution in which the inner end surface of the post terminal body 251 is parallel to the axial cross-section 236 of the cell component, this configuration can reduce the flipping angle of the post terminal component 25, which is conducive to shortening the length of the conductive part 26.

According to some embodiments of the present application, referring to FIG. 11, the cell component 23 includes an active substance-coated part 231 accommodated in the accommodating cavity 204 and a tab part 232 connected to the active substance-coated part 231, and the tab part 232 includes a gathering part 234 formed by stacking and connecting a plurality of layers of tab plates 233.

In this way, the plurality of layers of tab plates 233 are connected to form the gathering part 234, such that electrical conduction is established among the plurality of layers of tab plates 233 in the gathering part 234. That is, the plurality of layers of tab plates 233 in the gathering part 234 are not only arranged in a stacked manner, but also electrically connected and conductive. The connection method of the plurality of layers of tab plates 233 in the gathering part 234 is not limited, and may be, for example, welding (such as ultrasonic welding, ultrasonic pre-welding and laser welding, resistance welding, pressure fusion welding, or brazing), or perforated connection, or conductive adhesive bonding. Illustratively, ultrasonic welding may be performed on the plurality of layers of tab plates 233 of the same polarity, and the resulting ultrasonic weld mark is the gathering part 234.

Illustratively, the plurality of layers of tab plates 233 in the gathering part 234 may belong to the same electrode assembly 235, or may belong to different electrode assemblies 235. That is, several layers of tab plates 233 of the same polarity in the same electrode assembly 235 may be connected to form the gathering part 234, or several layers of tab plates 233 of the same polarity in different electrode assemblies 235 may be connected to form the gathering part 234. Illustratively, all tab plates 233 of the same polarity in the electrode component may be connected to form the gathering part 234, which can reduce the number of the gathering parts 234.

In the above technical solution, by pre-connecting the plurality of layers of tab plates 233 in the tab part 232 to form the gathering part 234, the gathering part 234 can take the form of a plate structure in which the plurality of layers of tab plates 233 are connected together and a certain rigidity is provided, rather than the form of a loose and scattered multi-layer foil structure. This facilitates the assembly and connection operations between the tab part 232 and other components, such as perforation and welding operations, such that voids are less likely to form in the weld seam formed between the tab part 232 and other components, thereby improving the connection reliability and electrical conductivity at the welding joint, and enabling the electrical conductivity between the electrode component and the post terminal component 25 to be more stable and reliable.

According to some embodiments of the present application, referring to FIG. 11 again, at least part of the gathering part 234 is laid on the inner end surface 2511 of the post terminal body and is connected to the inner end surface 2511 of the post terminal body.

In this case, the conductive part 26 may include only the tab part 232, and the tab part 232 is directly connected to the post terminal body 251, thereby eliminating the step of connecting the conductive member 261 to the tab part 232. Furthermore, by pre-connecting the plurality of layers of tab plates 233 in the tab part 232 to form the gathering part 234, the gathering part 234 can take the form of a plate structure in which the plurality of layers of tab plates 233 are connected together and a certain rigidity is provided, rather than the form of a loose and scattered multi-layer foil structure. This facilitates the mating connection between the tab part 232 and the post terminal body 251, making the welding between the tab part 232 and the terminal body 251 more reliable and reducing the likelihood of void formation in the weld seam, thereby improving the connection reliability and electrical conductivity at the welding joint, and enabling the electrical conductivity between the electrode component and the post terminal component 25 to be more stable and reliable. In addition, by laying the gathering part 234 on the inner end surface 2511 of the post terminal body, the gathering part 234 is in a flattened and spread-out state, and at least part of the gathering part 234 falls on the inner end surface 2511 of the post terminal body. This will not cause damage to the tab part 232 due to the bending of the gathering part 234, thereby improving the conductive performance. Moreover, it facilitates the pressing of the gathering part 234 by a welding press nozzle, thereby improving the connection reliability between the gathering part 234 and the post terminal body 251.

According to some embodiments of the present application, referring to FIG. 11 again, the entirety of the gathering part 234 is laid on the inner end surface 2511 of the post terminal body.

That is, the inner end surface 2511 of the post terminal body is greater than or equal to the area of the gathering part 234, such that the gathering part 234 can completely fall on the inner end surface 2511 of the post terminal body. This helps to increase the connection area between the inner end surface 2511 of the post terminal body and the gathering part 234, thereby improving the current passage efficiency.

According to some embodiments of the present application, referring to FIGs. 12 to 14, the cell component 23 includes an active substance-coated part 231 accommodated in the accommodating cavity 204 and a tab part 232 connected to the active substance-coated part 231, and the tab part 232 is connected to the post terminal body 251 via a conductive member 261.

Thus, by indirectly connecting the tab part 232 to the post terminal body 251 via the conductive member 261, the length of the tab part 232 can be shortened, and problems such as wrinkling, bending, and breakage of the tab plate 233 can be alleviated. Moreover, by flexibly designing the shape and material of the conductive member 261, the difficulty in connecting to the post terminal body 251 can be reduced, thereby improving the ease of connection between the conductive member 261 and the post terminal body 251. In addition, the perforation operation of the conductive part 26, the connection operation between the conductive part 26 and the post terminal component 25 (this operation may be omitted), and the connection operation between the post terminal component 25 and the housing component 21 are all less likely to cause cracking at the connection position between the active substance-coated part 231 and the tab part 232, thereby improving the reliability of the battery cell 20.

The tab part 232 of the electrode component includes a stacked part 237 formed by stacking and gathering a plurality of layers of tab plates 233, and the plurality of layers of tab plates 233 in the stacked part 237 are connected to form a gathering part 234. That is, the tab part 232 includes the gathering part 234 formed by stacking and connecting a plurality of layers of tab plates 233.

Illustratively, the stacked part 237 may be connected to the conductive member 261, thereby eliminating the step of connecting the stacked part 237 to form the gathering part 234. Alternatively, illustratively, the plurality of layers of tab plates 233 in the stacked part 237 may be connected to form the gathering part 234, and then the gathering part 234 is connected to the conductive member 261, thereby enabling a flexible and diversified design of the structure of the conductive member 261.

Illustratively, the conductive member 261 may be connected to the inner end surface 2511 of the post terminal body, thereby shortening the length of the conductive member 261. For example, referring to FIG. 14, the conductive member 261 may include a second connecting segment 2613, and the second connecting segment 2613 may be laid on the inner end surface 2511 of the post terminal body and connected to the inner end surface 2511 of the post terminal body, thereby improving the connection reliability and conductive performance between the conductive member 261 and the post terminal body 251. Alternatively, illustratively, the conductive member 261 may also be connected to other positions of the post terminal body 251. For example, the conductive member 261 is pre-buried in the post terminal body 251, or penetrates through the post terminal body 251 to be connected to the post terminal body 251.

According to some embodiments of the present application, referring to FIG. 14, the conductive member 261 includes a first connecting segment 2611, the first connecting segment 2611 includes two clamping parts 2612, the tab part 232 includes a tab end part 2321, and the tab end part 2321 is sandwiched between the two clamping parts 2612 and is connected to the clamping parts 2612.

The tab end part 2321 may be the stacked part 237 or the gathering part 234. Thus, the two clamping parts 2612 can be used to limit the tab end part 2321, thereby improving the connection reliability of the plurality of layers of tab plates 233 in the tab end part 2321. In addition, in some examples, by providing two clamping parts 2612, the tab end part 2321 sandwiched between the two clamping parts 2612 is enabled to be in the state of the stacked part 237, which eliminates the step of connecting the plurality of layers of tab plates 233 in the stacked part 237 to form the gathering part 234, thereby simplifying the processing procedure and improving the processing efficiency.

According to some embodiments of the present application, referring to FIG. 14 again, the surface of the post terminal body 251 on the end facing the cell component 23 is the inner end surface 2511 of the post terminal body, the conductive member 261 includes a second connecting segment 2613, the second connecting segment 2613 is laid on the inner end surface 2511 of the post terminal body and is connected to the inner end surface 2511 of the post terminal body, and the conductive member 261 is bent at a connection position between the first connecting segment 2611 and the second connecting segment 2613, such that the first connecting segment 2611 is located on a side, distal to the post terminal body 251, of the second connecting segment 2613, and one of the clamping parts 2612 is supported on a side, distal to the post terminal body 251, of the tab end part 2321.

Thus, by supporting the tab part 232 with the clamping part 2612, the redundancy of the tab part 232 can be improved, and the risk of short circuit caused by the reverse insertion of the active substance-coated part 231 into the tab part 232 can be reduced. Moreover, the bent conductive member 261 can serve as a buffer and support, thereby reducing the risk of the electrode component impacting the housing component 21, and improving the reliability of the battery cell 20.

According to some embodiments of the present application, the tab part 232 includes a gathering part 234 formed by stacking and connecting a plurality of layers of tab plates 233, the conductive member 261 includes a first connecting segment 2611, and the gathering part 234 is stacked on a side of the first connecting segment 2611 in the thickness direction and is connected to the first connecting segment 2611.

The first connecting segment 2611 is in the form of a plate, and the thickness direction of the first connecting segment 2611 is consistent with the thickness direction of the gathering part 234. The first connecting segment and the gathering part are stacked in the thickness direction of the first connecting segment 2611, such that the mating method between the gathering part 234 and the conductive member 261 is simple, which is conducive to improving the production efficiency.

According to some embodiments of the present application, the surface of the post terminal body 251 on the end facing the cell component 23 is the inner end surface 2511 of the post terminal body, and the first connecting segment 2611 is supported on a side, distal to the post terminal body 251, of the gathering part 234, such that the gathering part 234 is sandwiched between the inner end surface 2511 of the post terminal body and the first connecting segment 2611. Thus, by supporting the gathering part 234 with the first connecting segment 2611, the redundancy of the tab part 232 can be improved, and the risk of short circuit caused by the reverse insertion of the active substance-coated part 231 into the tab part 232 can be reduced.

According to some embodiments of the present application, the battery cell 20 further includes a pressure relief device 27. The pressure relief device 27 is disposed on the housing component 21, and the pressure relief device and the post terminal component 25 are located on a same side or different sides.

Illustratively, the pressure relief device 27 may be an anti-explosion valve mounted on the housing component 21, or a thinned region integrally formed on the housing component 21. Thus, by providing the pressure relief device 27, when the pressure in the housing component 21 exceeds a preset value, directional pressure relief can be achieved through the pressure relief device 27, thereby improving the safety and reliability of the battery cell 20.

Illustratively, referring to FIG. 15, FIG. 15 is a schematic structural diagram of a battery cell according to some embodiments of the present application. The pressure relief device 27 and the post terminal component 25 are located on the same side. Since the post terminal component 25 is disposed on the second housing wall 242, when the pressure relief device 27 is also disposed on the second housing wall 242, the pressure relief device 27 and the post terminal component 25 are located on the same side. Thus, the design of other housing walls other than the second housing wall 242 can be simplified, and the structure and processing of the battery cell 20 can be simplified.

Illustratively, referring to FIG. 10, FIG. 10 is a top view of a battery cell according to some embodiments of the present application. The pressure relief device 27 and the post terminal component 25 are located on different sides. Since the post terminal component 25 is disposed on the second housing wall 242, when the pressure relief device 27 is also disposed on other walls of the housing component 21 other than the second housing wall 242, for example, when the pressure relief device 27 is disposed on the cover plate 22, the pressure relief device 27 and the post terminal component 25 are located on different sides. Thus, there is no need to reduce the volume of the post terminal component 25 in view of the space occupied by the pressure relief device 27 on the second housing wall 242, such that the shape and volume of the post terminal component 25 can be flexibly designed as required.

According to some embodiments of the present application, referring to FIGs. 11 and 13 again, the post terminal component 25 includes a post terminal body 251, an adapter structure 252, and an insulating and sealing structure 253. The adapter structure 252 surrounds the post terminal body 251 and is connected to the cover plate 22 or the housing body 24, and the insulating and sealing structure 253 is fitted between the adapter structure 252 and the post terminal body 251 in an insulating and sealing manner.

The adapter structure 252 surrounds the entire periphery of the post terminal body 251 along the circumferential direction of the mounting hole 249, such that the adapter structure 252 can serve to connect the post terminal body 251 to the second housing wall 242 or connect the post terminal body 251 to the cover plate 22 in the outer peripheral region of the post terminal body 251. The insulating and sealing structure 253 insulates the adapter structure 252 from the post terminal body 251 and renders the mating position between the adapter structure 252 and the post terminal body 251 in a sealed state, so as to isolate the interior and exterior of the housing component 21 after the adapter structure 252 is connected to the housing component 21, thereby reducing the risk of the electrolytic solution in the housing component 21 leaking out of the housing component 21 from the mating position between the adapter structure 252 and the post terminal body 251, and reducing the risk of liquid, dust, or the like outside the housing component 21 entering the housing component 21 from the mating position between the adapter structure 252 and the post terminal body 251. Therefore, the reliability of the battery cell 20 is improved.

In the above technical solution, in addition to the post terminal body 251, the post terminal component 25 further includes the adapter structure 252 connected to the housing component 21, and the insulating and sealing structure 253 serving an insulating and sealing function is disposed between the adapter structure 252 and the post terminal body 251, such that when the post terminal component 25 is mounted on the housing component 21 and the adapter structure 252 is connected to the housing component 21, no sealing member or the like needs to be disposed between the adapter structure 252 and the housing component 21, and no large sealing pressure needs to be applied to meet the compression degree of the sealing member at this position. This can reduce the force received by the second housing wall 242 or the cover plate 22 and protect the housing component 21, thereby helping to reduce the wall thickness of the housing component 21 and reducing material costs. In addition, when the second housing wall 242 is the end of the housing body 24 opposite to an opening, the force received by the joint between the first housing wall 243 and the second housing wall 242 can be reduced, and the force received by the first housing wall 243 can be reduced, thereby helping to ensure the reliability of the housing component 21 and reducing the wall thickness and cost of the housing component 21.

According to some embodiments of the present application, referring to FIG. 10 again, the adapter structure 252 is formed as an elongated strip (e.g., a rectangle or a racetrack) extending in a length direction of the first housing wall 243, and the contour shape of the post terminal body 251 matches the contour shape of the adapter structure 252 (e.g., a rectangle or a racetrack). As described above, the cell component 23 is connected to the post terminal component 25 via the conductive part 26. When the contour shape of the post terminal body 251 is formed into an elongated strip matching the contour shape of the adapter structure 252, the post terminal body 251 has a large area, which is conducive to increasing the connection area between the conductive part 26 and the post terminal body 251, thereby improving the conductive performance.

In some other embodiments of the present application, referring to FIG. 14 again, the adapter structure 252 is formed as an elongated strip (e.g., a rectangle or a racetrack) extending in the length direction of the first housing wall 243, and the post terminal body 251 is disposed at the central position of the adapter structure 252 in the length direction and is circular. Thus, the connection position between the adapter structure 252 and the post terminal body 251 is subjected to a uniform force, making it easy to control the compression amount of the insulating and sealing structure 253, thereby improving the reliability of the sealing fit between the adapter structure and the post terminal body.

A battery cell 20, a battery 100 having the battery cell 20, and a vehicle 1000 having the battery 100 according to six specific examples of the present utility model will be described below with reference to the drawings.

### Example 1

Referring to FIGs. 3 to 5, a vehicle includes a battery 100. The battery 100 includes a battery cell 20. The battery cell 20 includes a housing component 21, a post terminal component 25, and a cell component 23. The housing component 21 includes a housing body 24. An open end 241 and a first housing wall 243 are respectively formed at two opposite ends of the housing body 24. The first housing wall 243 is provided with a mounting hole 249, a second housing wall 242 is formed on at least one side, adjacent to the first housing wall 243, of the housing body 24, and a guiding part 244 is disposed between the second housing wall 242 and the first housing wall 243. The guiding part 244 includes a guiding surface 2441 located within the housing body 24, and in a direction from the open end 241 toward the first housing wall 243, a distance between the guiding surface 2441 and an inner wall surface of the second housing wall 242 gradually increases. The post terminal component 25 is mounted on the first housing wall 243 and covers the mounting hole 249, and the post terminal component 25 includes a post terminal body 251 disposed opposite to the mounting hole 249. The cell component 23 is accommodated in the housing body 24 and includes an electrode assembly 235. Tab plates 233 of the electrode assembly 235 are connected to form a gathering part 234. The gathering part 234 is connected to the post terminal body 251. The housing body 24 has a first direction F1 and a second direction F2 that are parallel to an outer wall surface of the first housing wall 243, a dimension of the first housing wall 243 in the first direction F1 is greater than a dimension of the first housing wall 243 in the second direction F2, and the second housing wall 242 is formed at both ends of the housing body 24 in the first direction F1 and at both ends of the housing body in the second direction F2. In a direction perpendicular to the second housing wall 242, a dimension D1 of the first housing wall 243 is less than a distance D2 between the second housing wall 242 and another opposite housing wall, and the first housing wall 243 is connected to the second housing wall 242 via the guiding part 244.

A wall thickness h2 of the guiding part 244 and a wall thickness h3 of the second housing wall 242 are less than a wall thickness h1 of the first housing wall 243. The guiding part 244 is provided with an outer side surface 2442 located outside the housing body 24. The outer side surface 2442 is parallel to the guiding surface 2441, and a spacing between the outer side surface 2442 and the guiding surface 2441 is equal to the wall thickness h3 of the second housing wall 242. The guiding surface 2441 is configured as an inclined surface.

### Example 2

Referring to FIG. 7, a vehicle includes a battery 100. The battery 100 includes a battery cell 20. The battery cell 20 includes a housing component 21, a post terminal component 25, and a cell component 23. The housing component 21 includes a housing body 24. An open end 241 and a first housing wall 243 are respectively formed at two opposite ends of the housing body 24. The first housing wall 243 is provided with a mounting hole 249, a second housing wall 242 is formed on at least one side, adjacent to the first housing wall 243, of the housing body 24, and a guiding part 244 is disposed between the second housing wall 242 and the first housing wall 243. The guiding part 244 includes a guiding surface 2441 located within the housing body 24, and in a direction from the open end 241 toward the first housing wall 243, a distance between the guiding surface 2441 and an inner wall surface of the second housing wall 242 gradually increases. The post terminal component 25 is mounted on the first housing wall 243 and covers the mounting hole 249, and the post terminal component 25 includes a post terminal body 251 disposed opposite to the mounting hole 249. The cell component 23 is accommodated in the housing body 24 and includes an electrode assembly 235. Tab plates 233 of the electrode assembly 235 are connected to form a gathering part 234. The gathering part 234 is connected to the post terminal body 251. The housing body 24 has a first direction F1 and a second direction F2 that are parallel to an outer wall surface of the first housing wall 243, a dimension of the first housing wall 243 in the first direction F1 is greater than a dimension of the first housing wall 243 in the second direction F2, and the second housing wall 242 is formed at both ends of the housing body 24 in the first direction F1 and at both ends of the housing body in the second direction F2. In a direction perpendicular to the second housing wall 242, a dimension D1 of the first housing wall 243 is less than a distance D2 between the second housing wall 242 and another opposite housing wall, and the first housing wall 243 is connected to the second housing wall 242 via the guiding part 244.

A wall thickness h2 of the guiding part 244 and a wall thickness h3 of the second housing wall 242 are less than a wall thickness h1 of the first housing wall 243. The guiding part 244 is provided with an outer side surface 2442 located outside the housing body 24. The guiding surface 2441 is configured as a circular arc surface, and the radius of the guiding surface 2441 is 7 mm. The guiding part 244 is provided with an outer side surface 2442 located outside the housing body 24, and the outer side surface 2442 is configured as a circular arc surface. In the direction from the open end 241 toward the first housing wall 243, a spacing between the outer side surface 2442 and the guiding surface 2441 gradually increases.

### Example 2

Referring to FIGs. 8 to 9, a vehicle includes a battery 100. The battery 100 includes a battery cell 20. The battery cell 20 includes a housing component 21, a post terminal component 25, and a cell component 23. The housing component 21 includes a housing body 24. An open end 241 and a first housing wall 243 are respectively formed at two opposite ends of the housing body 24. The first housing wall 243 is provided with a mounting hole 249, a second housing wall 242 is formed on at least one side, adjacent to the first housing wall 243, of the housing body 24, and a guiding part 244 is disposed between the second housing wall 242 and the first housing wall 243. The guiding part 244 includes a guiding surface 2441 located within the housing body 24, and in a direction from the open end 241 toward the first housing wall 243, a distance between the guiding surface 2441 and an inner wall surface of the second housing wall 242 gradually increases. The post terminal component 25 is mounted on the first housing wall 243 and covers the mounting hole 249, and the post terminal component 25 includes a post terminal body 251 disposed opposite to the mounting hole 249. The cell component 23 is accommodated in the housing body 24 and includes an electrode assembly 235. Tab plates 233 of the electrode assembly 235 are connected to form a gathering part 234. The gathering part 234 is connected to the post terminal body 251. The housing body 24 has a first direction F1 and a second direction F2 that are parallel to an outer wall surface of the first housing wall 243, a dimension of the first housing wall 243 in the first direction F1 is greater than a dimension of the first housing wall 243 in the second direction F2, and the second housing wall 242 is formed at both ends of the housing body 24 in the first direction F1 and at both ends of the housing body in the second direction F2. In a direction perpendicular to the second housing wall 242, a dimension D1 of the first housing wall 243 is less than a distance D2 between the second housing wall 242 and another opposite housing wall, and the first housing wall 243 is connected to the second housing wall 242 via the guiding part 244.

The guiding part 244 includes two sections, namely a first section 2443 and a second section 2444. In a direction from the second housing wall 242 toward the first housing wall 243, the two sections are sequentially connected, and the latter section is closer to the mounting hole 249 than the former section. The two sections are arranged at an included angle, and at least a section of the two sections proximal to the first housing wall 243 is provided with the guiding surface 2441. The first section 2443 is perpendicular to the second housing wall 242. The second section 2444 is perpendicular to the first section 2443, connected to the first housing wall 243, and provided with the guiding surface 2441.

The embodiments of the present application can solve the problem that the cell component 23 is asymmetric with respect to the housing body 24 after the cell component is inserted into the housing body 24 and the problem that the expansion force resulting therefrom pulls the tab plates 233, thereby reducing the difficulty of inserting the cell component 23 into the housing. The connection part between the first housing wall 243 and the second housing wall 242 is formed as an inclined guiding surface, and an internal insulating member 238 is correspondingly adjusted to achieve the purpose of limiting the position of the cell component 23 after the cell component is inserted into the housing. The connection part between the first housing wall 243 and the second housing wall 242 is changed from the original two-level thickness of the first housing wall 243/second housing wall 242 to the three-level thickness of the first housing wall 243/guiding part 244/second housing wall 242, so as to meet the requirements for limiting the position after insertion into the housing and improving the strength of the first housing wall 243.

The width of the first housing wall 243 is reduced, the deflection during pull-out and post terminal push-twist is small, and higher strength is achieved when the first housing wall is riveted to the post terminal component 25. Alternatively, while meeting the strength for pull-out and post terminal push-twist, the thickness of the first housing wall 243 is reduced, thereby improving the energy density and reducing the weight.

According to some embodiments of the present application, the present application further provides a battery 100, and the battery 100 includes the battery cell 20 according to any one of the above embodiments.

In the above technical solutions, during assembly of the battery cell 20, the assembly difficulty is low. After the cell component 23 is inserted into the housing component 21, the cell component can be aligned with the housing body 24, thereby reducing the likelihood of the tab plates 233 being pulled apart from the post terminal body 251, and improving the reliability of the battery 100.

According to some embodiments of the present application, the battery 100 includes a case assembly 10, a plurality of battery cells 20 are provided and accommodated in the case assembly 10, the bottom of the case assembly 10 is a case bottom plate, the housing component 21 includes a cover plate 22 covering an opening of the housing body 24, the opening of the housing body 24 faces the case bottom plate, and the cover plate 22 covers the bottom of the housing body 24; alternatively, the opening of the housing body 24 faces away from the case bottom plate, and the cover plate 22 covers the top of the housing body 24.

That is, illustratively, the cover plate 22 covers the bottom of the housing body 24, and a pressure relief device 27 is disposed on the cover plate 22; alternatively, the cover plate 22 covers the top of the housing body 24, and a pressure relief device 27 is disposed on the second housing wall 242 opposite to the cover plate 22. In this way, once thermal runaway occurs in a battery cell 20, pressure can be relieved from the bottom of the battery cell 20, allowing the central venting channel design to be eliminated, thereby further freeing up space for the battery cell 20. This is conducive to improving the energy density of the battery 100, and meanwhile, directional pressure relief can be quickly achieved, such that ejecta can be rapidly discharged in a specified direction through the optimal channel, making it less likely to spread to the surrounding cells. Illustratively, the cover plate 22 covers the top of the housing body 24, and the battery cell 20 is in an upright state, such that the electrolytic solution is less prone to leakage. Therefore, the orientation of the battery cell 20 and the case assembly 10 can be flexibly arranged.

According to some embodiments of the present application, the present application further provides an electric device, and the electric device includes the battery cell 20 according to any one of the above embodiments, or includes the battery 100 according to any one of the above embodiments. The battery cell 20 or the battery 100 is used to power the electric device.

In the above technical solutions, the electric device employs the above battery 100 or battery cell 20. During assembly of the battery cell 20, the assembly difficulty is low. After the cell component 23 is inserted into the housing component 21, the cell component can be aligned with the housing body 24, thereby reducing the likelihood of the tab plates 233 being pulled apart from the post terminal body 251, improving the reliability of the battery 100, and helping to improve the performance of the electric device.

It should be noted that in the absence of conflicts, the embodiments and features in the embodiments of the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a housing component, comprising a housing body, wherein an open end and a first housing wall are respectively formed at two opposite ends of the housing body, the first housing wall is provided with a mounting hole, a second housing wall is formed on at least one side, adjacent to the first housing wall, of the housing body, a guiding part is disposed between the second housing wall and the first housing wall, the guiding part comprises a guiding surface located within the housing body, and in a direction from the open end toward the first housing wall, a distance between the guiding surface and an inner wall surface of the second housing wall gradually increases;
a post terminal component, mounted on the first housing wall and covering the mounting hole, wherein the post terminal component comprises a post terminal body disposed opposite to the mounting hole; and
a cell component, accommodated in an accommodating cavity of the housing body and connected to the post terminal body.

2. The battery cell according to claim 1, wherein the second housing wall is formed on at least two sides, adjacent to the first housing wall, of the housing body.

3. The battery cell according to claim 2, wherein the housing body has a first direction and a second direction that are parallel to an outer wall surface of the first housing wall, a dimension of the first housing wall in the first direction is greater than a dimension of the first housing wall in the second direction, and the second housing wall is formed at both ends of the housing body in the first direction and at both ends of the housing body in the second direction.

4. The battery cell according to any one of claims 1 to 3, wherein in a direction perpendicular to the second housing wall, a dimension of the first housing wall is less than a distance between the second housing wall and another opposite housing wall, and the first housing wall is connected to the second housing wall via the guiding part.

5. The battery cell according to claim 4, wherein a wall thickness of the guiding part and a wall thickness of the second housing wall are less than a wall thickness of the first housing wall.

6. The battery cell according to claim 5, wherein the guiding surface is configured as an inclined surface.

7. The battery cell according to claim 6, wherein the guiding part is provided with an outer side surface located outside the housing body, and the outer side surface is parallel to the guiding surface.

8. The battery cell according to claim 7, wherein a spacing between the outer side surface and the guiding surface is equal to the wall thickness of the second housing wall.

9. The battery cell according to claim 5, wherein the guiding surface is configured as a circular arc surface, and a radius of the guiding surface is R, wherein 5 mm ≤ R ≤ 9 mm.

10. The battery cell according to claim 9, wherein the guiding part is provided with an outer side surface located outside the housing body, and the outer side surface is configured as a circular arc surface.

11. The battery cell according to claim 10, wherein in the direction from the open end toward the first housing wall, a spacing between the outer side surface and the guiding surface gradually increases.

12. The battery cell according to claim 11, wherein a minimum spacing between the outer side surface and the guiding surface is equal to the wall thickness of the second housing wall.

13. The battery cell according to any one of claims 4 to 12, wherein the guiding part comprises at least two sections, the at least two sections are sequentially connected in a direction from the second housing wall toward the first housing wall, a latter section is closer to the mounting hole than a former section, any two adjacent sections are arranged at an included angle, and at least a section of the at least two sections proximal to the first housing wall is provided with the guiding surface.

14. The battery cell according to claim 13, wherein two sections are provided, namely a first section and a second section, the first section is perpendicular to the second housing wall, and the second section is perpendicular to the first section, connected to the first housing wall, and provided with the guiding surface.

15. The battery cell according to claim 14, wherein a first transition corner is provided between the first section and the second housing wall, and a second transition corner is provided between the second section and the first section.

16. The battery cell according to any one of claims 1 to 15, wherein a surface of the post terminal body on an end facing the cell component is an inner end surface of the post terminal body, and the cell component is connected to the inner end surface of the post terminal body via a conductive part.

17. The battery cell according to claim 16, wherein the cell component comprises an active substance-coated part accommodated in the accommodating cavity and a tab part connected to the active substance-coated part, the tab part comprises a gathering part formed by stacking and connecting a plurality of layers of tab plates, and at least part of the gathering part is laid on the inner end surface of the post terminal body and is connected to the inner end surface of the post terminal body.

18. The battery cell according to any one of claims 1 to 16, wherein the cell component comprises an active substance-coated part accommodated in the accommodating cavity and a tab part connected to the active substance-coated part, and the tab part is connected to the post terminal body via a conductive member.

19. The battery cell according to claim 18, wherein the conductive member comprises a first connecting segment, the first connecting segment comprises two clamping parts, the tab part comprises a tab end part, and the tab end part is sandwiched between the two clamping parts and is connected to the clamping parts.

20. The battery cell according to claim 19, wherein a surface of the post terminal body on an end facing the cell component is an inner end surface of the post terminal body, the conductive member comprises a second connecting segment, the second connecting segment is laid on the inner end surface of the post terminal body and is connected to the inner end surface of the post terminal body, the conductive member is bent at a connection position between the first connecting segment and the second connecting segment, such that the first connecting segment is located on a side, distal to the post terminal body, of the second connecting segment, and one of the clamping parts is supported on a side, distal to the post terminal body, of the tab end part.

21. The battery cell according to claim 20, wherein the tab part comprises a gathering part formed by stacking and connecting a plurality of layers of tab plates, the conductive member comprises a first connecting segment, and the gathering part is stacked on a side of the first connecting segment in a thickness direction and is connected to the first connecting segment.

22. The battery cell according to claim 21, wherein the surface of the post terminal body on the end facing the cell component is the inner end surface of the post terminal body, and the first connecting segment is supported on a side, distal to the post terminal body, of the gathering part, such that the gathering part is sandwiched between the inner end surface of the post terminal body and the first connecting segment.

23. The battery cell according to any one of claims 1 to 22, further comprising a pressure relief device, wherein the pressure relief device is disposed on the housing component, and the pressure relief device and the post terminal component are located on a same side or different sides.

24. The battery cell according to any one of claims 1 to 23, wherein the post terminal component comprises a post terminal body, an adapter structure, and an insulating and sealing structure, the adapter structure surrounds the post terminal body and is connected to the first housing wall, and the insulating and sealing structure is fitted between the adapter structure and the post terminal body in an insulating and sealing manner.

25. The battery cell according to claim 24, wherein the adapter structure is formed as an elongated strip extending in a length direction of the first housing wall, and a contour shape of the post terminal body matches a contour shape of the adapter structure; or the adapter structure is formed as an elongated strip extending in a length direction of the first housing wall, and the post terminal body is disposed at a central position of the adapter structure in the length direction and is circular.

26. A battery, comprising the battery cell according to any one of claims 1 to 25.

27. The battery according to claim 26, wherein the battery comprises a case assembly, a plurality of battery cells are provided and accommodated in the case assembly, a bottom of the case assembly is a case bottom plate, the housing component comprises a cover plate covering an opening of the housing body, the opening of the housing body faces the case bottom plate, and the cover plate covers a bottom of the housing body; or the opening of the housing body faces away from the case bottom plate, and the cover plate covers a top of the housing body.

28. An electric device, comprising the battery cell according to any one of claims 1 to 25 or the battery according to claim 26 or 27.
